(19) Europäisches Patentamt
European Patent Office
Office européen des brevets

(11) **EP 4 708 374 A1**

(12) **EUROPEAN PATENT APPLICATION**
published in accordance with Art. 153(4) EPC

(43) Date of publication:
**11.03.2026 Bulletin 2026/11**

(21) Application number: **24815937.8**

(22) Date of filing: **03.06.2024**

(51) International Patent Classification (IPC):
*H01M 4/131* (2010.01)          *H01M 4/525* (2010.01)
*H01M 4/505* (2010.01)          *H01M 10/052* (2010.01)
*H01M 4/02* (2006.01)

(52) Cooperative Patent Classification (CPC):
Y02E 60/10

(86) International application number:
**PCT/KR2024/007558**

(87) International publication number:
**WO 2024/248563 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.06.2023 KR 20230071872**

(71) Applicant: **LG Chem, Ltd.**
**Seoul 07336 (KR)**

(72) Inventors:
• **KIM, Sol Jin**
  **Daejeon 34122 (KR)**
• **KIM, Yern Seung**
  **Daejeon 34122 (KR)**
• **JEONG, Jin Hoo**
  **Daejeon 34122 (KR)**
• **KIM, Sang Hun**
  **Daejeon 34122 (KR)**

• **JU, Jin Wook**
  **Daejeon 34122 (KR)**
• **WOO, Sang Won**
  **Daejeon 34122 (KR)**
• **LYM, Jae Seung**
  **Daejeon 34122 (KR)**
• **KIM, Jeong Won**
  **Daejeon 34122 (KR)**
• **JUNG, Jin Hee**
  **Daejeon 34122 (KR)**
• **GU, Ye Hyeon**
  **Daejeon 34122 (KR)**
• **KIM, Jun Seong**
  **Daejeon 34122 (KR)**
• **CHOE, Gwang Seok**
  **Daejeon 34122 (KR)**

(74) Representative: **Hoffmann Eitle**
**Patent- und Rechtsanwälte PartmbB**
**Arabellastraße 30**
**81925 München (DE)**

(54) **CATHODE ACTIVE MATERIAL, PREPARATION METHOD THEREFOR, AND CATHODE AND LITHIUM SECONDARY BATTERY WHICH COMPRISE SAME**

(57)    The present invention relates to a positive electrode active material capable of improving performance of a lithium secondary battery, the positive electrode active material including: a first lithium composite transition metal oxide in a form of a single particle; and optionally a second lithium composite transition metal oxide in a form of a single particle, wherein the first lithium composite transition metal oxide in the form of a single particle includes 30 or less disk-type primary particles, wherein each of the disk-type primary particles is a primary particle observed from a scanning electron microscope (SEM) image of a surface or cross section of the positive electrode active material, wherein, when an imaginary tangent line with the most contact points is drawn to each of two boundary lines of the primary particle present within an angle of 45° or less based on a long diameter direction and one imaginary line crossing the two tangent lines is drawn, interior angles of same side are at least 150° and at most 210°, and an aspect ratio of (major axis/minor axis) is 1.5 or more, wherein the positive electrode active material includes the first lithium composite transition metal oxide in an amount of 20 vol% to 100 vol% based on a total volume of the positive electrode active material, a method for preparing the positive electrode active material, and a positive electrode and lithium secondary battery including the positive electrode

EP 4 708 374 A1

**(Cont. next page)**

active material.

[FIG. 1]

**Description**

**TECHNICAL FIELD**

Cross-reference to Related Applications

This application claims the benefit of Korean Patent Application No. 10-2023-0071872, filed on June 02, 2023, in the Korean Intellectual Property Office, the disclosure of which is incorporated herein in its entirety by reference.

Technical Field

The present invention relates to a positive electrode active material, a method for preparing the same, and a positive electrode and lithium secondary battery including the same.

**BACKGROUND ART**

Demand for secondary batteries as an energy source has been significantly increased as technology development and demand with respect to mobile devices have increased. Among these secondary batteries, lithium secondary batteries having high energy density, high discharge voltage, long cycle lifespan, and low self-discharge rate have been commercialized and widely used.

Lithium transition metal composite oxides have been used as a positive electrode active material of the lithium secondary battery, and, among these oxides, a lithium cobalt composite metal oxide, such as $LiCoO_2$, having a high operating voltage and excellent capacity characteristics has been mainly used. However, $LiCoO_2$ has poor thermal properties due to an unstable crystal structure caused by delithiation. Also, since $LiCoO_2$ is expensive, there is a limitation in using a large amount of $LiCoO_2$ as a power source for applications such as electric vehicles.

Lithium manganese composite metal oxides ($LiMnO_2$ or $LiMn_2O_4$), lithium iron phosphate compounds ($LiFePO_4$, etc.), or lithium nickel composite metal oxides ($LiNiO_2$, etc.) have been developed as materials for replacing $LiCoO_2$. Among these materials, research and development of the lithium nickel composite metal oxides, in which a large capacity battery may be easily achieved due to a high reversible capacity of about 200 mAh/g, have been more actively conducted. However, $LiNiO_2$ has limitations in that $LiNiO_2$ has poorer thermal stability than $LiCoO_2$, and, when internal short-circuit occurs in a charged state due to an external pressure, the positive electrode active material itself is decomposed to cause rupture and ignition of the battery. Accordingly, as a method to improve low thermal stability while maintaining the excellent reversible capacity of $LiNiO_2$, a lithium composite transition metal oxide, in which a portion of nickel (Ni) is substituted with cobalt (Co), manganese (Mn), or aluminum (Al), has been developed.

With respect to a lithium ion battery using this lithium composite transition metal oxide, particularly, a lithium composite transition metal oxide containing a high content of nickel (Ni-rich) as a positive electrode active material, battery capacity, high output, and gas generation at high temperatures are not only affected by chemical properties such as a composition of the positive electrode active material, a content of impurities, and a content of lithium by-product present on a surface thereof, but are also affected by physical properties such as size, surface area, density, and shape of positive electrode active material particles. Thus, in a case in which a lithium composite transition metal oxide containing a high content of nickel (Ni-rich) is used as a positive electrode active material, effort is required to appropriately harmonize capacity characteristics, output characteristics, high-temperature characteristics, life characteristics, and the like of the battery.

Thus, there is a need to develop a positive electrode active material capable of exhibiting excellent volumetric energy density and life characteristics.

[Prior Art Document]

[Patent Document]

(Patent Document 1) KR 2021-0117212 A

**DISCLOSURE OF THE INVENTION**

**TECHNICAL PROBLEM**

An aspect of the present invention provides a positive electrode active material capable of exhibiting excellent volumetric energy density and life characteristics.

Another aspect of the present invention provides a method for preparing the positive electrode active material.

Another aspect of the present invention provides a positive electrode including the positive electrode active material, and a lithium secondary battery including the positive electrode.

## TECHNICAL SOLUTION

In order to solve the above-described tasks, the present invention provides a positive electrode active material, a method for preparing the positive electrode active material, and a positive electrode for lithium secondary battery and a lithium secondary battery each including the positive electrode active material.

(1) The present invention provides a positive electrode active material including: a first lithium composite transition metal oxide in a form of a single particle; and optionally a second lithium composite transition metal oxide in a form of a single particle, wherein the first lithium composite transition metal oxide in the form of a single particle includes 30 or less disk-type primary particles, wherein each of the disk-type primary particles is a primary particle observed from a scanning electron microscope (SEM) image of a surface or cross section of the positive electrode active material, wherein, when an imaginary tangent line with the most contact points is drawn to each of two boundary lines of the primary particle present within an angle of 45° or less based on a long diameter direction and one imaginary line crossing the two tangent lines is drawn, interior angles of same side are at least 150° and at most 210°, and an aspect ratio of (major axis/minor axis) is 1.5 or more, wherein the positive electrode active material includes the first lithium composite transition metal oxide in an amount of 20 vol% to 100 vol% based on a total volume of the positive electrode active material.

(2) The present invention provides the positive electrode active material of (1) above, wherein the positive electrode active material comprises the first lithium composite transition metal oxide in an amount of 20 vol% to 70 vol% based on the total volume of the positive electrode active material.

(3) The present invention provides the positive electrode active material of (1) or (2) above, wherein the aspect ratio (major axis/minor axis) of the first lithium composite transition metal oxide is 1.5 to 10.

(4) The present invention provides the positive electrode active material of any one of (1) to (3) above, wherein, when calculating a value of a volume from Equation 1 below for each of the primary particles observed from the SEM image of the surface or cross section of the positive electrode active material, the first lithium composite transition metal oxide has a degree of single-particle formation ($V_{50}$) of 1.2 $\mu m^3$ or more, the degree of single-particle formation ($V_{50}$) corresponding to a volume at 50% of cumulative distribution of volume of the primary particles.

[Equation 1]

$$Volume = \frac{4\pi}{3} \times radius^3$$

In Equation 1, the radius is a radius of a surface or a cross-section of the primary particle when assuming that the surface or cross-section of the primary particle, which is observed from the SEM image (measurement magnification: 3,000 times), is circular.

(5) The present invention provides the positive electrode active material of any one of (1) to (4) above, wherein, when calculating a radius of each of the primary particles observed from the SEM image (measurement magnification: 3,000 times) of the surface or cross-section of the positive electrode active material, the first lithium composite transition metal oxide has an average radius ($R_{50}$) of 1 $\mu m$ to 15 $\mu m$ at 50% of cumulative distribution of radius of the primary particles, wherein the radius is a radius of a surface or cross-section of the primary particle when assuming that the surface or cross-section of the primary particle is circular.

(6) The present invention provides the positive electrode active material of any one of (1) to (5) above, wherein the first lithium composite transition metal oxide has a composition represented by Formula 1 below.

[Formula 1]     $Li_aNi_xCo_yM1_zM2_{1-x-y-z}O_2$

In Formula 1, $M^1$ is at least one selected from the group consisting of manganese (Mn) and aluminum (Al), $M^2$ is at least one selected from the group consisting of boron (B), barium (Ba), cerium (Ce), chromium (Cr), fluorine (F), magnesium (Mg), vanadium (V), titanium (Ti), iron (Fe), zirconium (Zr), zinc (Zn), silicon (Si), yttrium (Y), niobium (Nb), gallium (Ga), tin (Sn), molybdenum (Mo), tungsten (W), phosphorus (P), sulfur (S), strontium (Sr), tantalum (Ta), lanthanum (La), and hafnium (Hf), and $0.9 \leq a \leq 1.3$, $0.6 \leq x < 1.0$, $0 < y < 0.4$, $0 < z < 0.4$, and $0 \leq 1-x-y-z < 0.4$.

(7) The present invention provides a positive electrode comprising the positive electrode active material according to any one of (1) to (6) above.

(8) The present invention provides a lithium secondary battery comprising the positive electrode according to (7) above.

(9) The present invention provides a method for preparing a positive electrode active material, the method comprising the steps of: (A) preparing a mixture by mixing a positive electrode active material precursor, in which a density of an inner portion of the positive electrode active material precursor is lower than a density of an outer portion thereof, and a first lithium-containing raw material; and (B) preparing a primary sintered product by performing primary sintering on the mixture at a temperature of 800°C to 950°C, wherein the inner portion is a region corresponding to 50% or less of a radius from a center of the positive electrode active material precursor to the outermost point, wherein the positive electrode active material is a positive electrode active material in a form of a single particle composed of 30 or less primary particles, and comprises a first lithium composite transition metal oxide that is a disk type, wherein the first lithium composite transition metal oxide is comprised in an amount of 20 vol% to 100 vol% based on a total volume of the positive electrode active material.

(10) The present invention provides the method of (9) above, further comprising, immediately after step (B), step (B1) of grinding the primary sintered product.

(11) The present invention provides the method of (9) or (10) above, further comprising, after step (B), step (C) of preparing a secondary sintered product by mixing a second lithium-containing raw material with the primary sintered product and performing secondary sintering at a temperature of 680°C to 850°C.

(12) The present invention provides the method of (11) above, further comprising, immediately after step (C), step of (C1) grinding the secondary sintered product.

(13) The present invention provides the method of any one of (9) to (12) above comprising, for the positive electrode active material precursor, steps of: (S1) preparing a mixed solution for seed by adding a transition metal-containing solution and an ammonium ion-containing solution to a reactor comprising a stirring device at a constant flow rate, and performing stirring while adding a basic aqueous solution and maintaining a stirring speed; (S2) preparing a mixed solution for particle growth by performing stirring while adding the transition metal-containing solution, the ammonium ion-containing solution, and the basic aqueous solution to the mixed solution for seed and gradually decreasing the stirring speed; and (S3) preparing a mixed solution for positive electrode active material precursors by adding the transition metal-containing solution to the mixed solution for particle growth at a flow rate increased relative to a flow rate in step (S2), adding the ammonium ion-containing solution at a gradually increasing flow rate, and performing stirring while adding the basic aqueous solution and maintaining the stirring speed, wherein the basic aqueous solution is added such that a pH of the mixed solution for seed is maintained constant, the basic aqueous solution is added such that a pH of the mixed solution for particle growth is gradually decreased, and the basic aqueous solution is added such that a pH of the mixed solution for positive electrode active material precursors is maintained constant.

(14) The present invention provides the method of (13) above, wherein the basic aqueous solution is added such that the pH of the mixed solution for particle growth is gradually decreased from a range of 12 to 13 to a range of 11.2 to 12.6.

(15) The present invention provides the method of (13) or (14) above, wherein, in step (S2), the stirring is performed while gradually decreasing the stirring speed from a range of 700 rpm to 900 rpm to a range of 500 rpm to 650 rpm.

(16) The present invention provides the method of any one of (13) to (15) above, wherein, in step (S3), the transition metal-containing solution is added at the flow rate of 1.2 times to 1.4 times the flow rate in step (S2), and the ammonium ion-containing solution is added at the gradually increasing flow rate so as to reach a flow rate of 20% to 45% of the flow rate of the transition metal-containing solution.

## ADVANTAGEOUS EFFECTS

The positive electrode active material according to the present invention including: a first lithium composite transition metal oxide in a form of a single particle, and optionally a second lithium composite transition metal oxide in the form of a single particle,

where the first lithium composite transition metal oxide in a form of a single particle comprises 30 or less disk-type primary particles, wherein each of the disk type primary particles is a primary particle observed from a scanning electron microscope (SEM) image of a surface or a cross section of the positive electrode active material, wherein, when an imaginary tangent line with the most contact points is drawn to each of two boundary lines of the primary particle present within an angle of 45° or less based on a long diameter direction and one imaginary line crossing the two tangent lines is drawn, interior angles of same side are at least 150° and at most 210°, and an aspect ratio of (major axis/minor axis) is 1.5 or more, wherein the positive electrode active material according to the present invention comprises the first lithium composite transition metal oxide in an amount of 20 vol% to 100 vol% based on a total volume of the positive electrode active material. Accordingly, a positive electrode for lithium secondary battery and a lithium secondary battery each including the positive electrode active material according to the present invention may exhibit excellent volumetric energy density and life characteristics.

**BRIEF DESCRIPTION OF THE DRAWINGS**

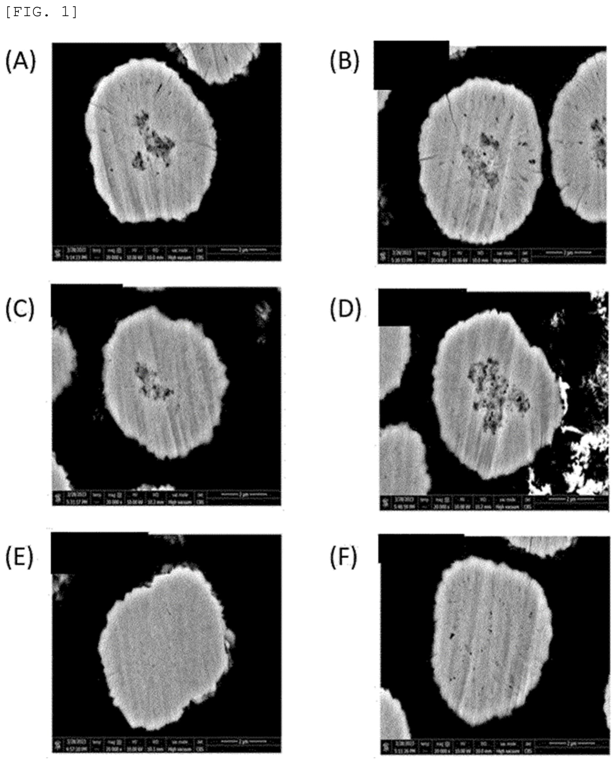

FIG. 1(A) is a scanning electron microscope (SEM) image of a cross-section of a positive electrode active material precursor prepared in Preparation Example 1. FIG. 1(B) is an SEM image of a cross-section of a positive electrode active material precursor prepared in Preparation Example 2. FIG. 1(C) is an SEM image of a cross-section of a positive electrode active material precursor prepared in Preparation Example 3. FIG. 1(D) is an SEM image of a cross-section of a positive electrode active material precursor prepared in Preparation Example 4. FIG. 1(E) is an SEM image of a cross-section of a positive electrode active material precursor prepared in Comparative Preparation Example 1. FIG. 1(F) is an SEM image of a cross-section of a positive electrode active material precursor prepared in Comparative Preparation Example 2.
FIG. 2 is a segmentation image of a positive electrode active material prepared in Example 1.
FIG. 3 is a segmentation image of a positive electrode active material prepared in Example 2.
FIG. 4 is a segmentation image of a positive electrode active material prepared in Example 3.
FIG. 5 is a segmentation image of a positive electrode active material prepared in Example 5.
FIG. 6 is a segmentation image of a positive electrode active material prepared in Comparative Example 1.
FIG. 7 is a segmentation image of a positive electrode active material prepared in Comparative Example 2.

**BEST MODE FOR CARRYING OUT THE INVENTION**

Hereinafter, the present invention will be described in more detail.
It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.
The term "primary particle" in the present invention refers to the smallest particle unit that is distinguished as one lump when a cross-section of a positive electrode active material is observed through a scanning electron microscope (SEM), and may be composed of one grain or a plurality of grains. The "grain" or "grain region" refers to a region in which atoms in a sample are continuously and periodically arranged in one direction. The grain may be analyzed using an electron backscatter diffraction (EBSD) analyzer.
The term "secondary particle" in the present invention refers to a secondary structure formed by aggregation of a plurality of the primary particles. An average particle diameter of the secondary particle may be measured using a particle size analyzer.
The term "form of a single particle" in the present invention may be used interchangeably with the term "single particle-type", and refers to a shape that contrasts with a secondary particle shape formed by aggregation of hundreds of primary particles prepared by a conventional method. In addition, the term "single particle-type positive electrode active material" or "lithium transition metal oxide in the form of a single particle" as used herein is a concept, which contrasts with a positive electrode active material in the form of a secondary particle formed by aggregation of hundreds of primary particles prepared by the conventional method, and may be a single particle composed of one primary particle, or may be the form of a secondary particle in which 2 or more, or 5 or more, and 10 or less, 15 or less, 20 or less, 25 or less, or 30 or less of primary particles are aggregated.
The term "proportion by volume (vol%)" in the present invention refers to a value obtained by calculating a volume from Equation 1 below for each of primary particles observed from a scanning electron microscope (SEM) image (measurement magnification: 3,000 times) of a surface or cross-section of a positive electrode active material, to obtain a total volume of the positive electrode active material and a total volume of a first lithium composite transition metal oxide, and then dividing the total volume of the first lithium composite transition metal oxide by the total volume of the positive electrode active material and multiplying 100.

[Equation 1]

$$\text{Volume} = \frac{4\pi}{3} \times radius^3$$

In Equation 1,

the radius is a radius of the surface or cross-section of the primary particle when assuming that the surface or cross-section of the primary particle observed from the SEM image (measurement magnification: 3,000 times) is circular.

The term "average particle diameter ($D_{50}$)" in the present invention refers to a particle diameter at 50% of cumulative distribution of volume according to the particle diameter. After dispersing measurement target powder in a dispersion medium, the dispersion medium is introduced into a commercial laser diffraction particle size measurement instrument (e.g., QUANTA FEG 250 by FEI), a particle size distribution is calculated by measuring a difference in diffraction patterns due to a particle size when particles pass through a laser beam, and the $D_{50}$ may be measured by calculating a particle diameter at 50% of the cumulative distribution of volume according to the particle diameter using the measurement instrument.

The term "segmentation image" in the present invention refers to a segmented image as an individual positive electrode active material particle unit, and may be obtained by a method including a first step of analyzing positive electrode active material powder through a scanning electron microscope to obtain an SEM image, and a second step of removing an edge of an individual positive electrode active material particle from the SEM image by using a deep learning or computer image processing technique, and then detecting a contour of the individual positive electrode active material particle and obtaining an segmented image as an individual positive electrode active material particle unit by using the detected contour. Specifically, the segmentation image may be obtained through methods set forth in KR 10-2022-0048191 A and KR 10-2022-0048192 A.

The term "long diameter" in the present invention refers to a length of the longest line segment when a line is drawn passing through two points of a primary particle boundary in the primary particle observed from an SEM image of a surface or cross section of a positive electrode active material.

The term "aspect ratio" in the present invention refers to a ratio measured by, first, selecting a shape of one primary particle to be measured from an SEM image of a particle and then measuring a ratio of a major axis to a minor axis, i.e., aspect ratio, using an eigen vector.

In the present invention, the term "major axis" refers to an axis which passes through a center of gravity of the primary particle and in which axial dispersion is maximum, and the term "minor axis" refers to an axis which passes through a center of gravity of the primary particle and in which axial dispersion is minimum.

## Positive Electrode Active Material

Hereinafter, a positive electrode active material according to the present invention will be described.

The present inventors have found that, in a case in which a positive electrode active material includes a first lithium composite transition metal oxide in the form of a single particle, and optionally a second lithium composite transition metal oxide in the form of a single particle, where the first lithium composite transition metal oxide in the form of a single particle includes 30 or less disk-type primary particles, where each of the disk-type primary particles is a primary particle observed from a SEM image of a surface or cross section of the positive electrode active material, and when an imaginary tangent line with the most contact points is drawn to each of two boundary lines of the primary particle present within an angle of 45° or less based on a long diameter direction and one imaginary line crossing the two tangent lines is drawn, interior angles of same side are at least 150° and at most 210°, and an aspect ratio of (major axis/minor axis) is 1.5 or more, and the positive electrode active material includes the first lithium composite transition metal oxide in an amount of 20 vol% to 100 vol% based on a total volume of the positive electrode active material, the positive electrode active material may not react well with an electrolyte, and thus effects that energy density of a battery including the positive electrode active material is maintained and also life characteristics of the battery is improved may be achieved, thereby leading to the completion of the present invention.

The first lithium composite transition metal oxide is in the form of a single particle composed of 30 or less primary particles. That is, the first lithium composite transition metal oxide is a single particle or in the form of a single particle in which 2 to 30 primary particles are aggregated. The form of the single particle is distinct from a secondary particle in which more than 30 primary particles are aggregated. In a case in which the first lithium composite transition metal oxide is in the form of a single particle, stability may be excellent. Thus, even when being rolled, the positive electrode active material including the first lithium composite transition metal oxide may not break or crack to reduce a side reaction between the positive electrode active material and an electrolyte solution. Accordingly, durability against volume changes during charge and discharge of a battery may be improved to improve life characteristics. In a case in which the first lithium composite transition metal oxide is in the form of a secondary particle, there is a problem in that the positive electrode active material including the first lithium composite transition metal oxide breaks or cracks, and thus the life characteristics are poor due to the side reaction between the positive electrode active material and the electrolyte solution.

The single particle-type first lithium composite transition metal oxide includes 30 or less disk-type primary particles, and each of the disk-type primary particles is a primary particle observed from the SEM image of the surface or cross section of the positive electrode active material, where, when an imaginary tangent line with the most contact points is drawn to each of two boundary lines of the primary particle present within an angle of 45° or less based on a long diameter direction and one imaginary line crossing the two tangent lines is drawn, the interior angles of same side are at least 150° and at most 210°, and the aspect ratio of (major axis/minor axis) is 1.5 or more.

In an X-ray diffraction spectrum analysis of the disk-type primary particle, a crystalline size of a (003) plane may be 380 nm to 480 nm, particularly 400 nm to 450 nm, and more particularly 400 nm to 440 nm.

The disk-type primary particle has an advantage in that due to low reactivity with the electrolyte solution, an irreversible damage to the positive electrode active material does not occur rapidly even when charge and discharge are repeated. However, in a case in which the first lithium composite transition metal oxide in the form of a single particle is not the disk-type primary particle, there is a problem in that, as charge and discharge are repeated, the irreversible damage to the positive electrode active material is rapidly increased and thus the life characteristics are poor.

The positive electrode active material according to the present invention includes the first lithium composite transition metal oxide in an amount of 20 vol% to 100 vol% based on the total volume of the positive electrode active material. Specifically, the first lithium composite transition metal oxide may be included in an amount of 20 vol% or more, or 25 vol% or more, and 70 vol% or less, 75 vol% or less, 80 vol% or less, 85 vol% or less, 90 vol% or less, 95 vol% or less, or 100 vol% or less based on a total volume of the positive electrode active material. In a case in which the amount of the first lithium composite transition metal oxide satisfies the above range, excellent performance may be exhibited also in terms of initial charge capacity, and also excellent life characteristics may be exhibited.

According to an embodiment of the present invention, the first lithium composite transition metal oxide may have an aspect ratio of (major axis/minor axis) of 1.5 or more. Specifically, the aspect ratio may be 1.5 or more, 1.51 or more, 1.52 or more, 1.53 or more, 1.54 or more, 1.55 or more, 1.56 or more, 1.57 or more, 1.58 or more, 1.59 or more, 1.6 or more, 1.7 or more, 1.8 or more, 1.9 or more, 2.0 or more, 2.5 or more, 3.0 or more, or 4.0 or more, and may be 5.0 or less, 6.0 or less, 7.0 or less, 8.0 or less, 9.0 or less, or 10.0 or less. In a case in which the aspect ratio of the first lithium composite transition metal oxide is within the above range, the positive electrode active material including a disk-type particle may be prepared, thereby having an effect of improving the life characteristics.

According to an embodiment of the present invention, when calculating a volume from Equation 1 below for each of the primary particles observed from the SEM image of the surface or cross section of the positive electrode active material, the first lithium composite transition metal oxide may have a degree of single-particle formation ($V_{50}$) of 1.2 $\mu$m$^3$ or more, the degree of single-particle formation corresponding to a volume at 50% of cumulative distribution of volume of the primary particles.

[Equation 1]

$$Volume = \frac{4\pi}{3} \times radius^3$$

In Equation 1,
the radius is a radius of the surface or cross-section of the primary particle when assuming that the surface or cross-section of the primary particle observed from the SEM image (measurement magnification: 3,000 times) is circular.

Specifically, the degree of single-particle formation ($V_{50}$) may be 1.2 $\mu$m$^3$ or more, 1.3 $\mu$m$^3$ or more, 1.4 $\mu$m$^3$ or more, 1.5 $\mu$m$^3$ or more, 1.6 $\mu$m$^3$ or more, 1.7 $\mu$m$^3$ or more, 1.8 $\mu$m$^3$ or more, 1.9 $\mu$m$^3$ or more, 2.0 $\mu$m$^3$ or more, or 2.1 $\mu$m$^3$ or more, and may be 3.6 $\mu$m$^3$ or less, 4.0 $\mu$m$^3$ or less, or 5.0 $\mu$m$^3$ or less. In a case in which the degree of single-particle formation ($V_{50}$) is within the above range, there is an effect of improving the energy density and the life characteristics.

According to an embodiment of the present invention, in the first lithium composite transition metal oxide, when the radius of each of the primary particles observed from the SEM image (measurement magnification: 3,000 times) of the surface or cross-section of the positive electrode active material is calculated, an average radius ($R_{50}$) at 50% of cumulative distribution of radius of the particles may be 1 $\mu$m to 15 $\mu$m, and the radius may be a radius of the surface or cross-section of the primary particle when assuming that the surface or cross-section of the primary particle is circular.

Specifically, the average radius ($R_{50}$) may be 1 μm or more, or 2 μm or more, and may be 10 μm or less, 12 μm or less, or 15 μm or less.

According to an embodiment of the present invention, the positive electrode active material may further optionally include the second lithium composite transition metal oxide in the form of a single particle.

The second lithium composite transition metal oxide is in the form of a single particle composed of 30 or less primary particles. That is, the second lithium composite transition metal oxide is a single particle or in the form of a single particle in which 2 to 30 primary particles are aggregated. The form of the single particle is distinct from a secondary particle in which more than 30 primary particles are aggregated. In a case in which the second lithium composite transition metal oxide is in the form of a single particle, stability may be excellent. Thus, even when being rolled, the positive electrode active material including the second lithium composite transition metal oxide may not break or crack, thereby reducing a side reaction between the positive electrode active material and the electrolyte solution. Accordingly, the durability against volume changes during charge and discharge of the battery may be improved to improve the life characteristics. In a case in which the second lithium composite transition metal oxide is in the form of a secondary particle, there is a problem in that the positive electrode active material including the second lithium composite transition metal oxide breaks or cracks, and thus the life characteristics are poor due to the side reaction between the positive electrode active material and the electrolyte solution.

Also, the second lithium composite transition metal oxide does not include a disk-type primary particle. For example, the second lithium composite transition metal oxide may have a polyhedron shape, a sphere shape, an elliptical sphere shape, a cylindrical shape, a particle shape, or a similar shape, but not satisfy the definition of the disk type.

The second lithium composite transition metal oxide may have superior reactivity to the first lithium composite transition metal oxide, and by including the second lithium composite transition metal oxide, the positive electrode active material according to the present invention may exhibit excellent performance also in terms of the initial charge capacity.

Also, the second lithium composite transition metal oxide may have an average radius ($D_{50}$) of 1 μm or more, 2 μm or more, 3 μm or more, or 4 μm or more, and may be 5 μm or less, 10 μm or less, or 15 μm or less.

According to an embodiment of the present invention, the first lithium composite transition metal oxide may have a composition represented by Formula 1 below.

$$[\text{Formula 1}] \qquad Li_aNi_xCo_yM^1_zM^2_{1-x-y-z}O_2$$

In Formula 1,

$M^1$ is at least one selected from the group consisting of manganese (Mn) and aluminum (Al),
$M^2$ is at least one selected from the group consisting of boron (B), barium (Ba), cerium (Ce), chromium (Cr), fluorine (F), magnesium (Mg), vanadium (V), titanium (Ti), iron (Fe), zirconium (Zr), zinc (Zn), silicon (Si), yttrium (Y), niobium (Nb), gallium (Ga), tin (Sn), molybdenum (Mo), tungsten (W), phosphorus (P), sulfur (S), strontium (Sr), tantalum (Ta), lanthanum (La), and hafnium (Hf), and
$0.9 \leq a \leq 1.3$, $0.6 \leq x < 1.0$, $0 < y < 0.4$, $0 < z < 0.4$, and $0 \leq 1-x-y-z < 0.4$.

$M^1$ may be at least one selected from the group consisting of Mn and Al, and $M^2$ is a doping element, and specifically, may be at least one selected from the group consisting of B, Ba, Ce, Cr, F, Mg, V, Ti, Fe, Zr, Zn, Si, Y, Nb, Ga, Sn, Mo, W, P, S, Sr, Ta, La, and Hf. $M^2$ is not essentially included, but when an appropriate amount of $M^2$ is included, the particle form of the positive electrode active material may be improved, and stability of a crystal structure may be improved.

a may be 0.9 or more, 0.95 or more, or 1 or more, and may be 1.1 or less, 1.2 or less, or 1.3 or less. When a satisfies the above range, a high capacity characteristic and high energy density per unit volume may be achieved.

x is a molar fraction of nickel (Ni) of total metals excluding lithium in the first lithium composite transition metal oxide, and x may be 0.6 or more, 0.65 or more, 0.7 or more, 0.75 or more, or 0.8 or more, and may be 0.9 or less, or less than 1. When x is within the above range, the capacity characteristic of the positive electrode active material may be improved.

y is a molar fraction of cobalt (Co) of the total metals excluding lithium in the first lithium composite transition metal oxide, and y may be more than 0, 0.01 or more, 0.02 or more, or 0.03 or more, and may be 0.05 or less, 0.06 or less, 0.07 or less, 0.08 or less, 0.09 or less, 0.1 or less, 0.2 or less, 0.3 or less, or less than 0.4. When y satisfies the above range, structural stability may be increased, and a decomposition reaction of the electrolyte solution may be relatively reduced.

z is a molar fraction of $M^1$ of the total metals excluding lithium in the first lithium composite transition metal oxide, and z may be more than 0.01, 0.02 or more, 0.03 or more, 0.05 or more, 0.06 or more, 0.07 or more, or 0.08 or more, and may be 0.09 or less, 0.1 or less, 0.2 or less, 0.3 or less, or less than 0.4. When z satisfies the above range, the structural stability may be increased, and the decomposition reaction of the electrolyte solution may be relatively reduced.

According to an embodiment of the present invention, the second lithium composite transition metal oxide may have a composition represented by Formula 2 below.

[Formula 2]     $Li_{a1}Ni_{x1}Co_{y1}M1'_{z1}M2'_{1-x1-y1-z1}O_2$

In Formula 2,

M1' is at least one selected from the group consisting of Mn and Al,

M2' is at least one selected from the group consisting of B, Ba, Ce, Cr, F, Mg, V, Ti, Fe, Zr, Zn, Si, Y, Nb, Ga, Sn, Mo, W, P, S, Sr, Ta, La, and Hf, and

$0.9 \leq a1 \leq 1.3$, $0.6 \leq x1 < 1.0$, $0 < y1 < 0.4$, $0 < z1 < 0.4$, and $0 \leq 1-x1-y1-z1 < 0.4$.

M1' may be at least one selected from the group consisting of Mn and Al, and M2' is a doping element, and specifically, may be at least one selected from the group consisting of B, Ba, Ce, Cr, F, Mg, V, Ti, Fe, Zr, Zn, Si, Y, Nb, Ga, Sn, Mo, W, P, S, Sr, Ta, La, and Hf. M2' is not essentially included, but when an appropriate amount of M2' is included, the particle form of the positive electrode active material may be improved, and the stability of the crystal structure may be improved.

a1 may be 0.9 or more, 0.95 or more, or 1 or more, and may be 1.1 or less, 1.2 or less, or 1.3 or less. When a1 satisfies the above range, the high capacity characteristic and the high energy density per unit volume may be achieved.

x1 is a molar fraction of nickel (Ni) of the total metals excluding lithium in the second lithium composite transition metal oxide, and x1 may be 0.6 or more, 0.65 or more, 0.7 or more, 0.75 or more, or 0.8 or more, and may be 0.9 or less, or less than 1. When x1 is within the above range, the capacity characteristic of the positive electrode active material may be improved.

y1 is a molar fraction of cobalt (Co) of the total metals excluding lithium in the second lithium composite transition metal oxide, and y1 may be more than 0, 0.01 or more, 0.02 or more, or 0.03 or more, and may be 0.05 or less, 0.06 or less, 0.07 or less, 0.08 or less, 0.09 or less, 0.1 or less, 0.2 or less, 0.3 or less, or less than 0.4. When y1 satisfies the above range, the structural stability may be increased, and the decomposition reaction of the electrolyte solution may be relatively reduced.

z1 is a molar fraction of M1' of the total metals excluding lithium in the second lithium composite transition metal oxide, and z1 may be more than 0, 0.01 or more, 0.02 or more, 0.03 or more, 0.05 or more, 0.06 or more, 0.07 or more, or 0.08 or more, and may be 0.09 or less, 0.1 or less, 0.2 or less, 0.3 or less, or less than 0.4. When z1 satisfies the above range, the structural stability may be increased, and the decomposition reaction of the electrolyte solution may be relatively reduced.

The composition may be the same or different between the first lithium composite transition metal oxide and the second lithium composite transition metal oxide. For example, the molar fraction of nickel of the total metals excluding lithium in the first lithium composite transition metal oxide may be 70 mol% or more, and the molar fraction of nickel of the total metals excluding lithium in the second lithium composite transition metal oxide may be 80 mol% to 95 mol%.

Each of the first lithium composite transition metal oxide and the second lithium composite transition metal oxide may further include, as necessary, a coating portion including at least one element (hereinafter referred to as a "coating element") selected from the group consisting of Co, Al, B, Ba, Ce, Cr, F, Mg, V, Ti, Fe, Zr, Zn, Si, Y, Nb, Ga, Sn, Mo, W, P, S, Sr, Ta, La, and Hf on a surface thereof. In a case in which the coating portion as above is included, contact between the lithium composite transition metal oxide and the electrolyte solution may be blocked, and thus dissolution of the transition metal and gas generation due to the side reaction with the electrolyte solution may be effectively suppressed.

The coating portion may be formed through a method of mixing the first lithium composite transition metal oxide or the second lithium composite transition metal oxide and a raw material including the coating element and then heat-treating the mixture at a temperature of 200°C to 800°C.

## Method for Preparing Positive Electrode Active Material

Hereinafter, a method for preparing a positive electrode active material of the present invention will be described. This method for preparing the positive electrode active material of the present invention is a method for preparing the above-described positive electrode active material according to the present invention.

The method for preparing the positive electrode active material according to the present invention includes steps of (A) preparing a mixture by mixing a positive electrode active material precursor, in which a density of an inner portion of the positive electrode active material precursor is lower than a density of an outer portion thereof, and a first lithium-containing raw material, and (B) preparing a primary sintered product by performing primary sintering on the mixture at a temperature of 800°C to 950°C, the interior being a region corresponding to 50% or less of a radius from a center of the positive electrode active material precursor to the outermost point, the positive electrode active material being in the form of a single particle composed of 30 or less primary particles and including a first lithium composite transition metal oxide that is a disk type, and the first lithium composite transition metal oxide being included in an amount of 20 vol% to 100 vol% based on a total volume of the positive electrode active material.

The above-described positive electrode active material according to the present invention may be prepared by appropriately adjusting types of the raw materials, a mixing ratio of the raw materials, sintering time, or the like.

Hereinafter, each of the steps of the present invention will be specifically described.

**Step (A)**

The method includes step (A) of preparing the mixture by mixing the positive electrode active material precursor, in which the density of the inner portion is lower than the density of the outer portion, and the first lithium-containing raw material.

In the positive electrode active material precursor, the density of the inner portion is lower than the density of the outer portion. Here, the interior is a region corresponding to 50% or less of the radius from the center of the positive electrode active material precursor to the outermost point. In a case in which the density of the inner portion of the precursor is lower than the density of the outer portion, when the precursor is mixed with the lithium-containing raw material and then sintered, the positive electrode active material including disk-type primary particles in a specific amount may be prepared. In a case in which the density of the inner portion of the positive electrode active material precursor is the same as the density of the outer portion, or the density of the inner portion is higher than the density of the outer portion, there is a problem in that the disk-type primary particles are not sufficiently formed.

According to an embodiment of the present invention, the method includes, for the positive electrode active material precursor, steps of (S1) preparing a mixed solution for seed by adding a transition metal-containing solution and an ammonium ion-containing solution to a reactor including a stirring device at a constant flow rate, and performing stirring while adding a basic aqueous solution and maintaining a stirring speed, (S2) preparing a mixed solution for particle growth by performing stirring while adding the transition metal-containing solution, the ammonium ion-containing solution, and the basic aqueous solution to the mixed solution for seed and gradually decreasing the stirring speed, and (S3) preparing a mixed solution for positive electrode active material precursor by adding the transition metal-containing solution to the mixed solution for particle growth at a flow rate increased relative to a flow rate in step (S2), adding the ammonium ion-containing solution at a gradually increasing flow rate, and performing stirring while adding the basic aqueous solution and maintaining the stirring speed, the basic aqueous solution being added such that a pH of the mixed solution for seed is maintained to be constant, the basic aqueous solution being added such that a pH of the mixed solution for particle growth is gradually decreased, and the basic aqueous solution being added such that a pH of the mixed solution for positive electrode active material precursor is maintained to be constant. In this case, the positive electrode active material precursor, in which the density of the inner portion is lower than the density of the outer portion, may be effectively prepared.

Step (S1) may be a seed formation step, step (S2) may be a particle ingrowth step, and step (S3) may be a particle outgrowth step. In a case in which the stirring speed is not gradually decreased in step (S2), there is a problem in that the positive electrode active material, in which the density of the inner portion is lower than the density of the outer portion, is difficult to prepare. In a case in which, in step (S3), the transition metal-containing solution is not added to the mixed solution for particle growth at the flow rate increased relative to the flow rate in step (S2), or the ammonium ion-containing solution is not added at the gradually increasing flow rate, it is difficult to increase the density of the outer portion to be higher than the density of the inner portion.

First, according to an embodiment of the present invention, the basic aqueous solution may be added such that the pH of the mixed solution for particle growth is gradually decreased from a range of 12 to 13 to a range of 11.2 to 12.6. Specifically, the basic aqueous solution may be added such that the pH of the mixed solution for particle growth is gradually decreased from a range of 12 to 12.5 to a range of 11.2 to 11.5. The basic aqueous solution may be added such that the pH of the mixed solution for particle growth is gradually decreased by 0.05 to 0.2 per hour. The basic aqueous solution may be added such that, when the mixed solution for particle growth reaches a target pH, the pH is maintained to be constant.

According to an embodiment of the present invention, in step (S1) and step (S3), the stirring may be performed at a constant stirring speed. In this case, there is an effect that the particles are grown with uniform density.

According to an embodiment of the present invention, in step (S2), the stirring may be performed while gradually decreasing the stirring speed from a range of 700 rpm to 900 rpm to a range of 500 rpm to 650 rpm. Specifically, in step (S2), the stirring may be performed while gradually decreasing the stirring speed from a range of 700 rpm to 900 rpm to a range of 500 rpm to 650 rpm, or from a range of 750 rpm to 850 rpm to a range of 500 rpm to 600rpm. The stirring speed may be a stirring speed from a time point at which the transition metal-containing solution, the ammonium ion-containing solution, and the basic aqueous solution start to be added to the mixed solution for seed to a time point right before step (S3) is performed. In a case in which the stirring is performed while gradually decreasing the stirring speed in step (S2) within the above range, there is an effect that the particles are grown with low density.

According to an embodiment of the present invention, in step (S3), the transition metal-containing solution may be added at the flow rate of 1.2 times to 1.4 times the flow rate in step (S2), and the ammonium ion-containing solution may be added at the gradually increasing flow rate so as to reach a flow rate of 20% to 45% of the flow rate of the transition metal-containing solution. Specifically, in step (S3), the transition metal-containing solution may be added at the flow rate of 1.2 times or more, or 1.3 times or more, and 1.4 times or less the flow rate in step (S2), and the ammonium ion-containing solution may be added at the gradually increasing flow rate so as to reach a flow rate of 20% or more, or 25% or more, and 35% or less, 40% or less, or 45% or less of the flow rate of the transition metal-containing solution. In a case in which the flow rates of the transition metal-containing solution and the ammonium ion-containing solution are adjusted within the above ranges, the positive electrode active material precursor in which the density of the outer portion is increased may be prepared.

**Step (B)**

Thereafter, the method includes step (B) of preparing the primary sintered product by performing primary sintering on the mixture at the temperature of 800°C to 950°C.

Specifically, the primary sintered product is prepared by performing the primary sintering on the mixture at a temperature of 800°C or more, or 850°C or more, and 900°C or less, or 950°C or less. In a case in which the temperature for the primary sintering is within the above range, a structurally stable primary sintered product in the form of a single particle is prepared while the primary particles of the positive electrode active material precursor are aggregated. In a case in which the temperature for the primary sintering is lower than 800°C, the sintered product in the form of a single particle may be difficult to prepare, and in a case in which the temperature for the primary sintering is higher than 950°C, there is a problem in that a structurally unstable sintered product with a low degree of crystallinity is prepared.

The primary sintering may be performed in an oxygen atmosphere, in terms of preventing degradation of the lithium composite transition metal oxide into a rock salt structure.

The primary sintering may be performed for 3 hours to 12 hours. Specifically, the primary sintering may be performed for 3 hours or more, 4 hours or more, or 5 hours or more, and 6 hours or less, 9 hours or less, 10 hours or less, 11 hours or less, or 12 hours or less. In this case, the primary particles may be aggregated, and crystallinity of the primary sintered product may be improved.

In the primary sintering, a heating rate may be 4 °C/min to 7 °C/min, and specifically, may be 5 °C/min to 7 °C/min. In a case in which, in the primary sintering, the heating rate satisfies the above range, the structurally more stable primary sintered product in the form of a single particle may be formed while the primary particles of the positive electrode active material precursor are aggregated, and an amount of fine powder having a particle diameter of 1 $\mu$m or less may be minimized in a finally prepared positive electrode active material.

According to an embodiment of the present invention, step (B1) of grinding the primary sintered product may be further included immediately after step (B). The primary sintered product may be ground such that an average particle diameter ($D_{50}$) is in a range of 3.50 $\mu$m to 10.00 $\mu$m, in terms of preventing an increase in initial resistance. The grinding may be performed using a pin mill, an air classifying mill (ACM), a jet mill, or the like. With respect to the pin mill, milling may be performed at 18,000 rpm, with respect to the ACM, classification may be performed at 6,000 rpm and milling may be performed at 12,000 rpm using equipment by Hosokawa, and, with respect to the jet mill, classification may be performed at 3,500 rpm and milling may be performed at a pressure of 6 bars using equipment by ZM solution. In this case, a positive electrode active material having a desired average particle diameter ($D_{50}$) may be easily obtained.

According to an embodiment of the present invention, after step (B), the method may further include step (C) of preparing a secondary sintered product by mixing a second lithium-containing raw material with the primary sintered product and then performing secondary sintering at a temperature of 680°C to 850°C. Specifically, the secondary sintered product may be prepared by mixing the second lithium-containing raw material with the primary sintered product and then performing the secondary sintering at a temperature of 680°C or more, 700°C or more, 720°C or more, 740°C or more, 760°C or more, or 780°C or more, and 800°C or less, 820°C or less, or 850°C or less.

Here, the primary sintered product before the secondary sintering may be cooled to room temperature. In a case in which the temperature for the secondary sintering is within the above range, there are advantages in that a layered structure is restored while lithium is intercalated into a rock salt structure which may be formed on a surface of the primary sintered product due to the high temperature during the primary sintering and a lithium by-product is reduced.

The secondary sintering may be performed in an oxygen atmosphere, in terms of preventing degradation of the lithium composite transition metal oxide into the rock salt structure.

The secondary sintering may be performed for 3 hours to 12 hours. Specifically, the secondary sintering may be performed for 3 hours or more, 4 hours or more, 5 hours or more, 6 hours or more, 7 hours or more, or 8 hours or more, and 9 hours or less, 10 hours or less, 11 hours or less, or 12 hours or less. In this case, there is an effect of increasing a degree of crystallinity of the internal crystal structure of the positive electrode active material.

In the secondary sintering, a heating rate may be 4 °C/min to 7 °C/min, and specifically, may be 5 °C/min to 7 °C/min. In a case in which, in the secondary sintering, the heating rate satisfies the above range, the layered structure may be restored while lithium is more effectively intercalated into the rock salt structure which may be formed on the surface of the primary sintered product, the lithium by-product may be further reduced, and the amount of the fine powder having the particle diameter of 1 $\mu$m or less may be minimized in the positive electrode active material after the rolling.

According to an embodiment of the present invention, step of (C1) grinding the secondary sintered product may be further included immediately after step (C). The secondary sintered product may be ground such that an average particle diameter ($D_{50}$) is in a range of 3.50 μm to 10.00 μm, in terms of preventing the increase in initial resistance. The grinding may be performed using a pin mill, an ACM, a jet mill, or the like. With respect to the pin mill, milling may be performed at 18,000 rpm, with respect to the ACM, classification may be performed at 6,000 rpm and milling may be performed at 12,000 rpm using equipment by Hosokawa, and, with respect to the jet mill, classification may be performed at 3,500 rpm and milling may be performed at a pressure of 6 bars using equipment by ZM solution. In this case, the positive electrode active material having a desired average particle diameter ($D_{50}$) may be easily obtained.

According to an embodiment of the present invention, the positive electrode active material may be prepared through a process of adding the lithium-containing raw material in two portions. That is, the lithium-containing raw material is dividedly added before the primary sintering and before the secondary sintering, respectively. In this case, there is an advantage in that the intercalation of lithium into the rock salt structure, which may be formed on the surface, favors the restoration of the layered structure. In a case in which the lithium-containing raw material is added at once before the primary sintering, there is a problem of electrochemical performance degradation due to an increase in lithium by-product, and, when the lithium-containing raw material is not added in the secondary sintering, a problem occurs which requires high temperature and long time due to a low reaction rate.

In a case in which the lithium-containing raw material is added in two portions, in step (A), the first lithium-containing raw material may be mixed such that a ratio (M:Li) of the total number of moles (M) of transition metals included in the positive electrode active material precursor to the number of moles (Li) of lithium included in the first lithium-containing raw material is 1:0.98, 1:0.99, 1:1.00, 1:1.01, or 1:1.02 or more, and 1:1.01, 1:1.02, 1:1.03, or 1:1.04 or less, and, in step (C), the second lithium-containing raw material may be mixed such that a ratio (M:Li) of the total number of moles (M) of transition metals included in the primary sintered product to the total number of moles (Li) of lithium included in the primary sintered product is 1:1.00, 1:1.01, 1:1.02, or 1:1.03 or more, and 1:1.05, 1:1.06, 1:1.07, 1:1.08, 1:1.09, or 1:1.10 or less.

According to an embodiment of the present invention, the method may further include a step of (D) mixing the secondary sintered product and a cobalt-containing raw material and then performing a heat treatment. In this case, a coating portion containing Co is formed on the secondary sintered product.

According to an embodiment of the present invention, when mixing the secondary sintered product and the cobalt-containing raw material in step (D), an aluminum-containing raw material, a zirconium-containing raw material, or a combination thereof may be further mixed. In this case, the coating portion may further include Al, Zr, or a combination thereof in addition to Co.

According to an embodiment of the present invention, the cobalt-containing raw material may be mixed in an amount such that a ratio (B/A) of the number of moles (B) of cobalt contained in the cobalt-containing raw material to the total number of moles (A) of metals excluding lithium, which are included in the secondary sintered product, is in a range of 0.01 to 0.03. In this case, there is an advantage in that the lithium by-product may be controlled in a positive electrode active material preparation process that does not include a washing process.

According to an embodiment of the present invention, the cobalt-containing raw material may be at least one selected from $Co(OH)_2$, $Co_3O_4$, $CoO$, $(CH_3CO_2)_2Co$, $CoCl_2$, and $CoSO_4 \cdot H_2O$, and specifically, may be $Co(OH)_2$.

According to an embodiment of the present invention, the aluminum-containing raw material may be mixed in an amount of 0.03 part by weight to 0.10 part by weight based on 100 parts by weight of the secondary sintered product. In this case, lifespan, resistance, and gas generation amount may be improved by ensuring the structural stability.

According to an embodiment of the present invention, the aluminum-containing raw material may be at least one selected from $Al(OH)_3$, $Al_2(SO_4)_3 \cdot xH_2O$, $Al_2O_3$, $Al(NO_3)_3 \cdot 9H_2O$, $AlCl_3$, and $C_2H_5O_4Al$, and specifically, may be $Al(OH)_3$.

According to an embodiment of the present invention, the zirconium-containing raw material may be at least one selected from $Zr(OH)_4$, $ZrO_2$, $Zr(NO_3)_4$, $ZrCl_4$, $ZrS_2$, $Zr(SO_4)_2$, and $C_9H_{12}O_8Zr$.

According to an embodiment of the present invention, the heat treatment may be performed in an oxygen atmosphere to prevent the degradation of the lithium composite transition metal oxide into the rock salt structure.

According to the present invention, in order to form the coating portion to have an appropriate thickness, the heat treatment may be performed such that, after heat treatment is performed at a temperature of 600°C or more, 610°C or more, 620°C or more, 630°C or more, 640°C or more, or 650°C or more, and 720°C or less, 740°C or less, 760°C or less, 780°C or less, or 800°C or less, the temperature is decreased to a range of 450°C to 550°C, and the heat treatment is performed at a temperature of 450°C or more, 460°C or more, 470°C or more, or 480°C or more, and 520°C or less, 530°C or less, 540°C or less, or 550°C or less. That is, in one sintering profile, primary heat treatment is performed at the temperature of 600°C to 800°C, and then secondary heat treatment may be performed at the temperature of 450°C to 550°C.

According to the present invention, the heat treatment may be performed for 1 hour or more, 2 hours or more, or 3 hours or more, and 8 hours or less, 9 hours or less, or 10 hours or less in order to increase a degree of crystallinity of the coating portion.

The transition metal-containing solution may include at least one selected from the group consisting of Ni, Co, and Mn, and specifically, may include Ni, Co, and Mn.

Also, the transition metal-containing solution may include an additional metal-containing raw material. The additional metal-containing raw material may be, for example, oxide, hydroxide, oxyhydroxide, carbonate, sulfate, halide, sulfide, acetate, nitrate, carboxylate, or a combination thereof, each including at least one selected from the group consisting of Al, Ti, W, B, F, P, Mg, Fe, Cr, V, Cu, Ca, Zn, Zr, Nb. Mo, Sr, Sb, Bi, Si, Cr, Hf, Ta, La, Ba, Ce, Sn, Y and S, and specifically, may be $ZnO$, $Al_2O_3$, $Al(OH)_3$, $AlSO_4$, $AlCl_3$, Al-isopropoxide, $AlNO_3$, $TiO_2$, $WO_3$, $AlF$, $H_2BO_3$, $HBO_2$, $H_3BO_3$, $H_2B_4O_7$, $B_2O_3$, $C_6H_5B(OH)_2$, $(C_6H_5O)_3B$, $[(CH_3(CH_2)_3O)_3B$, $C_3H_9B_3O_6$, $(C_3H_7O_3)B$, $Li_3WO_4$, $(NH_4)_{10}W_{12}O_{41}\cdot 5H_2O$, $NH_4H_2PO_4$, or the like. However, the additional metal-containing raw material is not limited thereto.

**Positive Electrode**

Also, the present invention provides a positive electrode for a lithium secondary battery, the positive electrode including a positive electrode active material layer including the positive electrode active material. Specifically, the positive electrode includes a positive electrode current collector, and the positive electrode active material layer which is disposed on at least one surface of the positive electrode current collector and includes the positive electrode active material. The positive electrode active material layer may have a porosity of 10 vol% to 30 vol%, particularly 15 vol% to 30 vol%, and more particularly 18 vol% to 27 vol%.

The positive electrode current collector is not particularly limited as long as having conductivity without causing chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode current collector may generally have a thickness of 3 μm to 500 μm, and microscopic irregularities may be formed on a surface of the current collector to increase adhesion of the positive electrode active material. The positive electrode current collector may be used in various shapes, for example, a film, a sheet, a foil, a net, a porous body, a foam body, a non-woven fabric body, and the like.

The positive electrode active material layer may include a conductive agent and a binder in addition to the above-described positive electrode active material according to the present invention.

The positive electrode active material may be included in an amount of 80 wt% to 99 wt%, more particularly, 85 wt% to 98 wt% based on a total weight of the positive electrode active material layer. When the positive electrode active material is included in the foregoing amount range, excellent capacity characteristics may be exhibited.

The conductive agent is used to provide conductivity to the electrode, and any conductive agent may be used without particular limitation as long as having electron conductivity without causing chemical changes in the provided battery. As a specific example, the conductive agent may be graphite such as natural graphite or artificial graphite, a carbon-based material such as carbon black, acetylene black, Ketjen black, channel black, furnace black, lamp black, thermal black, and carbon fibers, powder or fibers of a metal such as copper, nickel, aluminum, or silver, a conductive whisker such as zinc oxide whisker and potassium titanate whisker, conductive metal oxides such as titanium oxide, or a conductive polymer such as polyphenylene derivative, and any one thereof or a mixture of two or more thereof may be used. The conductive agent may be generally included in an amount of 1 wt% to 30 wt% based on the total weight of the positive electrode active material layer.

The binder serves to improve attachment between the positive electrode active material particles and adhesion between the positive electrode active material and the current collector. As a specific example, the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be manufactured according to a general method for manufacturing a positive electrode except that the positive electrode active material according to the present invention is used. Specifically, a composition for forming the positive electrode active material layer, which is prepared by dissolving or dispersing, in a solvent, the above-described positive electrode active material as well as optionally the binder, the conductive agent, and an additive, if necessary, may be applied onto the positive electrode current collector, and then undergone drying and rolling to manufacture the positive electrode. Here, types and amounts of the positive electrode active material, the binder, and the conductive agent are the same as those described above.

The solvent may be a solvent normally used in this technical field. The solvent may include dimethyl sulfoxide (DMSO), isopropyl alcohol, N-methylpyrrolidone (NMP), acetone, water, or the like, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and allow to have a viscosity that may provide excellent thickness uniformity during the subsequent coating for the manufacture of the positive electrode.

Also, as another method, the positive electrode may be manufactured by casting the composition for forming the positive electrode active material layer on a separate support and then laminating a film separated from the support on the positive electrode current collector.

## Lithium Secondary Battery

Also, in the present invention, an electrochemical device including the above positive electrode may be manufactured. The electrochemical device may be, specifically, a battery, a capacitor, or the like, and more specifically, may be a lithium secondary battery.

The lithium secondary battery specifically includes a positive electrode, a negative electrode disposed to oppose the positive electrode, and a separator and an electrolyte which are interposed between the positive electrode and the negative electrode. The positive electrode is the same as that described above and thus will not be specifically described, and only the remaining components will be specifically described below.

The lithium secondary battery may further optionally include a battery container which accommodates an electrode assembly of the positive electrode, the negative electrode, and the separator, and a sealing member which seals the battery container.

In the lithium secondary battery, the negative electrode includes a negative electrode current collector and a negative electrode active material layer disposed on the negative electrode current collector.

The negative electrode current collector is not particularly limited as long as having high conductivity without causing chemical changes in the battery, and, for example, copper, stainless steel, aluminum, nickel, titanium, fired carbon, copper or stainless steel, which is surface-treated with one of carbon, nickel, titanium, silver, or the like, an aluminum-cadmium alloy and the like may be used. Also, the negative electrode current collector may generally have a thickness of 3 $\mu$m to 500 $\mu$m, and, like the positive electrode current collector, the microscopic irregularities may be formed on a surface of the current collector to improve adhesion of the negative electrode active material. The negative electrode current collector may be used in various shapes, for example, a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. As a specific example, the negative electrode active material may be a carbonaceous material such as artificial graphite, natural graphite, graphitized carbon fibers, and amorphous carbon, a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy, a metal oxide which may be doped and undoped with lithium such as $SiO_\beta(0<\beta<2)$, $SnO_2$, vanadium oxide, and lithium vanadium oxide, or a composite such as a Si-C composite or a Sn-C composite including the metallic compound and the carbonaceous material, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon include soft carbon and hard carbon, and typical examples of the high crystalline carbon include irregular, planar, flaky, spherical, or fibrous natural graphite or artificial graphite, Kish graphite, pyrolytic carbon, mesophase pitch-based carbon fibers, meso-carbon microbeads, mesophase pitches, and high temperature sintered carbon such as petroleum or coal tar pitch derived cokes.

The negative electrode active material may be included in an amount of 80 parts by weight to 99 parts by weight based on 100 parts by weight of a total weight of the negative electrode active material layer.

The binder is a component that assists in the binding between the conductive agent, the active material, and the current collector, and is generally added in an amount of 0.1 part by weight to 10 parts by weight based on 100 parts by weight of the total weight of the negative electrode active material layer. Examples of this binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a nitrile-butadiene rubber, a fluoro rubber, various copolymers thereof, and the like.

The conductive agent is a component for further improving conductivity of the negative electrode active material, and may be added in an amount of 10 parts by weight or less, preferably 5 parts by weight or less based on 100 parts by weight of the total weight of the negative electrode active material layer. The conductive agent is not particularly limited as long as having conductivity without causing chemical changes in this battery, and, for example, a conductive material such as graphite such as natural graphite or artificial graphite, carbon black such as acetylene black, Ketjen black, channel black, furnace black, lamp black, and thermal black, conductive fibers such as carbon fibers or metal fibers, metal powder such as fluorocarbon powder, aluminum powder, and nickel powder, conductive whiskers such as zinc oxide whiskers and potassium titanate whiskers, conductive metal oxide such as titanium oxide, polyphenylene derivatives, or the like may be used.

For example, the negative electrode active material layer may be manufactured by applying a negative electrode material mixture, which is prepared by dissolving or dispersing the negative electrode active material and optionally the binder and the conductive agent in a solvent, onto the negative electrode current collector, followed by drying, or the negative electrode active material layer may be manufactured by casting the negative electrode material mixture on a separate support and then laminating a film separated from the support on the negative electrode current collector.

In the lithium secondary battery, the separator separates the negative electrode and the positive electrode and provides a movement path of lithium ions, and any separator may be used as the separator without particular limitation as long as being generally used in the lithium secondary battery. And particularly, a separator having good moisture-retention ability for an electrolyte solution as well as low resistance to the ion transfer of the electrolyte may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a general porous nonwoven fabric, for example, a nonwoven fabric formed of high melting point glass fibers or polyethylene terephthalate fibers may be used. Alternatively, a coated separator including a ceramic component or a polymer material may be used to secure heat resistance or mechanical strength, and the separator having a single-layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, a molten-type inorganic electrolyte, or the like which may be used in the manufacture of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone, an ether-based solvent such as dibutyl ether or tetrahydrofuran, a ketone-based solvent such as cyclohexanone, an aromatic hydrocarbon-based solvent such as benzene and fluorobenzene, a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC), an alcohol-based solvent such as ethyl alcohol and isopropyl alcohol, nitriles such as R-CN (where R is a linear, branched, or cyclic C2-C20 hydrocarbon group and may include a double-bond aromatic ring or ether bond), amides such as dimethylformamide, dioxolanes such as 1,3-dioxolane, or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as the lithium salt is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used as the lithium salt. The lithium salt may be used in a range of a concentration of 0.1 M to 2.0 M. In a case in which the concentration of the lithium salt is included within the above range, the electrolyte may have appropriate conductivity and viscosity. Thus, excellent performance of the electrolyte may be exhibited and lithium ions may effectively move.

In order to improve life characteristics of the battery, suppress a reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. Here, the additive may be included in an amount of 0.1 part by weight to 5 parts by weight based on 100 parts by weight of a total weight of the electrolyte.

As described above, since the lithium secondary battery including the positive electrode active material according to the present invention stably exhibits excellent discharge capacity, output characteristics, and life characteristics, the lithium secondary battery is suitable for portable devices, such as mobile phones, notebook computers, and digital cameras, and electric vehicles such as hybrid electric vehicles (HEVs).

Accordingly, according to another embodiment of the present invention, a battery module including the lithium secondary battery as a unit cell, and a battery pack including the battery module are provided.

The battery module or the battery pack may be used as a power source of at least one medium and large sized device of a power tool, electric vehicles including an electric vehicle (EV), a hybrid electric vehicle, and a plug-in hybrid electric vehicle (PHEV), or a power storage system.

An outer shape of the lithium secondary battery according to the present invention is not particularly limited, but a cylindrical type using a can, a prismatic type, a pouch type, a coin type, or the like may be used.

The lithium secondary battery according to the present invention may be used in a battery cell that is used as a power source of a small device, and also, may be used as a unit cell in a medium and large sized battery module including a plurality of battery cells.

Hereinafter, the present invention will be described in detail according to specific examples. The present invention may, however, be embodied in many different forms and should not be construed as being limited to the embodiments set forth herein. Rather, these embodiments of the present invention are provided so that this description will be thorough and complete, and will fully convey the scope of the present invention to those skilled in the art.

## MODE FOR CARRYING OUT THE INVENTION

## Preparation Examples

### Preparation Example 1

$NiSO_4$, $CoSO_4$, and $MnSO_4$ were mixed in water such that a molar ratio of nickel: cobalt: manganese was 88.5:3.5:8 to prepare a transition metal-containing solution having a concentration of 2.4 M. And 25 wt% of NaOH aqueous solution, and 9 wt% of $NH_4OH$ aqueous solution were prepared.

5 L of deionized water was put into a 30 L reactor including a stirring device, and then dissolved oxygen in the water was removed through purging with nitrogen gas in the reactor at a rate of 10 L/min to create a non-oxidizing atmosphere in the reactor. Thereafter, the NaOH aqueous solution and the $NH_4OH$ aqueous solution were added to adjust a pH of the solution in the reactor to reach pH 12.0, and then initial conditions were set such that a temperature of the reactor was 54°C and a stirring speed was 750 rpm.

A mixed solution for seed was prepared by adding the NaOH aqueous solution to the reactor while adding a transition metal-containing solution at a flow rate of 25 mL/min and the $NH_4OH$ aqueous solution at a flow rate of 8 mL/min, and performing stirring for 1 hour while maintaining the stirring speed at 750 rpm. Here, the NaOH aqueous solution was added such that a pH of the mixed solution for seed is maintained constant at 12.

Thereafter, a mixed solution for particle growth in which a particle diameter of a particle in the solution is 2.5 $\mu m$ was prepared by adding the NaOH aqueous solution to the mixed solution for seed while adding the transition metal-containing solution at a flow rate of 25 mL/min and the $NH_4OH$ aqueous solution at a flow rate of 8 mL/min, performing stirring for 3 hours while gradually decreasing the stirring speed by 50 rpm per hour until the stirring speed reached 600 rpm, starting from 750 rpm, and performing stirring for 17 hours while maintaining the stirring speed at 600 rpm. Here, the NaOH aqueous solution was added such that a pH of the mixed solution for particle growth was gradually decreased by 0.2 per hour until the pH of the mixed solution for particle growth reached pH 11.4, starting from pH 12, and then the NaOH aqueous solution was added such that the pH of the mixed solution for particle growth is maintained constant at 11.4.

And a mixed solution for positive electrode active material precursors, in which an average particle diameter ($D_{50}$) of the positive electrode active material precursor in the solution is 4.0 $\mu m$, was prepared by adding the transition metal-containing solution to the mixed solution for particle growth at a flow rate of 32.5 mL/min, adding the NaOH aqueous solution while adding the $NH_4OH$ aqueous solution at a flow rate gradually increased from 8 mL/min to 11.375 mL/min, and performing stirring for 72 hours while maintaining the stirring speed at 600 rpm. Here, the transition metal-containing solution was added at a flow rate of 1.3 times the flow rate of the transition metal-containing solution added when preparing the mixed solution for particle growth, the $NH_4OH$ aqueous solution was added at a flow rate gradually increased to reach 35% of the flow rate of the transition metal-containing solution, and the NaOH aqueous solution was added such that a pH of the mixed solution for positive electrode active material precursors is maintained constant at 11.4.

The mixed solution for positive electrode active material precursors was filtered and dried to prepare a positive electrode active material precursor in which a density of an inner portion is lower than a density of an outer portion.

### Preparation Example 2

$NiSO_4$, $CoSO_4$, and $MnSO_4$ were mixed in water such that a molar ratio of nickel: cobalt: manganese was 88.5:3.5:8 to prepare a transition metal-containing solution having a concentration of 2.4 M. And 25 wt% of NaOH aqueous solution, and 9 wt% of $NH_4OH$ aqueous solution were prepared.

5 L of deionized water was put into a 30 L reactor including a stirring device, and then dissolved oxygen in the water was removed through purging with nitrogen gas in the reactor at a rate of 10 L/min to create a non-oxidizing atmosphere in the reactor. Thereafter, the NaOH aqueous solution and the $NH_4OH$ aqueous solution were added to adjust a pH of the solution in the reactor to reach pH 12.0, and then initial conditions were set such that a temperature of the reactor was 54°C and a stirring speed was 800 rpm.

A mixed solution for seed was prepared by adding the NaOH aqueous solution to the reactor while adding a transition metal-containing solution at a flow rate of 25 mL/min and the $NH_4OH$ aqueous solution at a flow rate of 8 mL/min, and performing stirring for 1 hour while maintaining the stirring speed at 800 rpm. Here, the NaOH aqueous solution was added such that a pH of the mixed solution for seed is maintained constant at 12.

Thereafter, a mixed solution for particle growth in which a particle diameter of a particle in the solution is 2.0 $\mu$m was prepared by adding the NaOH aqueous solution to the mixed solution for seed while adding the transition metal-containing solution at a flow rate of 25 mL/min and the $NH_4OH$ aqueous solution at a flow rate of 8 mL/min, performing stirring for 5 hours while gradually decreasing the stirring speed by 40 rpm per hour until the stirring speed reached 600 rpm, starting from 800 rpm, and performing stirring for 25 hours while maintaining the stirring speed at 600 rpm. Here, the NaOH aqueous solution was added such that a pH of the mixed solution for particle growth was gradually decreased by 0.12 per hour until the pH of the mixed solution for particle growth reached pH 11.4, starting from pH 12, and then the NaOH aqueous solution was added such that the pH of the mixed solution for particle growth is maintained constant at 11.4.

And a mixed solution for positive electrode active material precursors, in which an average particle diameter ($D_{50}$) of the positive electrode active material precursor in the solution is 4.0 $\mu$m, was prepared by adding the transition metal-containing solution to the mixed solution for particle growth at a flow rate of 32.5 mL/min, adding the NaOH aqueous solution while adding the $NH_4OH$ aqueous solution at a flow rate gradually increased from 8 mL/min to 10 mL/min, and performing stirring for 60 hours while maintaining the stirring speed at 600 rpm. Here, the transition metal-containing solution was added at a flow rate of 1.3 times the flow rate of the transition metal-containing solution added when preparing the mixed solution for particle growth, the $NH_4OH$ aqueous solution was added at a flow rate gradually increased to reach 30% of the flow rate of the transition metal-containing solution, and the NaOH aqueous solution was added such that a pH of the mixed solution for positive electrode active material precursors is maintained constant at 11.4.

The mixed solution for positive electrode active material precursors was filtered and dried to prepare a positive electrode active material precursor in which a density of an inner portion is lower than a density of an outer portion.

**Preparation Example 3**

$NiSO_4$, $CoSO_4$, and $MnSO_4$ were mixed in water such that a molar ratio of nickel: cobalt: manganese was 88.5:3.5:8 to prepare a transition metal-containing solution having a concentration of 2.4 M. And 25 wt% of NaOH aqueous solution, and 9 wt% of $NH_4OH$ aqueous solution were prepared.

5 L of deionized water was put into a 30 L reactor including a stirring device, and then dissolved oxygen in the water was removed through purging with nitrogen gas in the reactor at a rate of 10 L/min to create a non-oxidizing atmosphere in the reactor. Thereafter, the NaOH aqueous solution and the $NH_4OH$ aqueous solution were added to adjust a pH of the solution in the reactor to reach pH 12.0, and then initial conditions were set such that a temperature of the reactor was 54°C and a stirring speed was 850 rpm.

A mixed solution for seed was prepared by adding the NaOH aqueous solution to the reactor while adding a transition metal-containing solution at a flow rate of 25 mL/min and the $NH_4OH$ aqueous solution at a flow rate of 8 mL/min, and performing stirring for 1 hour while maintaining the stirring speed at 850 rpm. Here, the NaOH aqueous solution was added such that a pH of the mixed solution for seed is maintained constant at 12.

Thereafter, a mixed solution for particle growth in which a particle diameter of a particle in the solution is 1.5 $\mu$m was prepared by adding the NaOH aqueous solution to the mixed solution for seed while adding the transition metal-containing solution at a flow rate of 25 mL/min and the $NH_4OH$ aqueous solution at a flow rate of 8 mL/min, performing stirring for about 6.25 hours while gradually decreasing the stirring speed by 40 rpm per hour until the stirring speed reached 600 rpm, starting from 850 rpm, and performing stirring for 23.75 hours while maintaining the stirring speed at 600 rpm. Here, the NaOH aqueous solution was added such that a pH of the mixed solution for particle growth was gradually decreased by 0.1 per hour until the pH of the mixed solution for particle growth reached pH 11.4, starting from pH 12, and then the NaOH aqueous solution was added such that the pH of the mixed solution for particle growth is maintained constant at 11.4.

And a mixed solution for positive electrode active material precursors, in which an average particle diameter ($D_{50}$) of the positive electrode active material precursor in the solution is 4.0 $\mu$m, was prepared by adding the transition metal-containing solution to the mixed solution for particle growth at a flow rate of 32.5 mL/min, adding the NaOH aqueous solution while adding the $NH_4OH$ aqueous solution at a flow rate gradually increased from 8 mL/min to 8.125 mL/min, and performing stirring for 50 hours while maintaining the stirring speed at 600 rpm. Here, the transition metal-containing solution was added at a flow rate of 1.3 times the flow rate of the transition metal-containing solution added when preparing the mixed solution for particle growth, the $NH_4OH$ aqueous solution was added at a flow rate gradually increased to reach 25% of the flow rate of the transition metal-containing solution, and the NaOH aqueous solution was added such that a pH of the mixed solution for positive electrode active material precursors is maintained constant at 11.4.

The mixed solution for positive electrode active material precursors was filtered and dried to prepare a positive electrode active material precursor in which a density of an inner portion is lower than a density of an outer portion.

**Preparation Example 4**

$NiSO_4$, $CoSO_4$, and $MnSO_4$ were mixed in water such that a molar ratio of nickel: cobalt: manganese was 88.5:3.5:8 to prepare a transition metal-containing solution having a concentration of 2.4 M. And 25 wt% of NaOH aqueous solution, and 9 wt% of $NH_4OH$ aqueous solution were prepared.

5 L of deionized water was put into a 30 L reactor including a stirring device, and then dissolved oxygen in the water was removed through purging with nitrogen gas in the reactor at a rate of 10 L/min to create a non-oxidizing atmosphere in the reactor. Thereafter, the NaOH aqueous solution and the $NH_4OH$ aqueous solution were added to adjust a pH of the solution in the reactor to reach pH 12.0, and then initial conditions were set such that a temperature of the reactor was 54°C and a stirring speed was 700 rpm.

A mixed solution for seed was prepared by adding the NaOH aqueous solution to the reactor while adding a transition metal-containing solution at a flow rate of 35 mL/min for the first 10 seconds and then at a constant flow rate of 25 mL/min and the $NH_4OH$ aqueous solution at a flow rate of 8 mL/min, and performing stirring for 1 hour while maintaining the stirring speed at 700 rpm. Here, the NaOH aqueous solution was added such that a pH of the mixed solution for seed is maintained constant at 12.

Thereafter, a mixed solution for particle growth in which a particle diameter of a particle in the solution is 3.0 $\mu$m was prepared by adding the NaOH aqueous solution to the mixed solution for seed while adding the transition metal-containing solution at a flow rate of 25 mL/min and the $NH_4OH$ aqueous solution at a flow rate of 8 mL/min, performing stirring for 3.3 hours while gradually decreasing the stirring speed by 30 rpm per hour until the stirring speed reached 600 rpm, starting from 700 rpm, and performing stirring for 16.7 hours while maintaining the stirring speed at 600 rpm. Here, the NaOH aqueous solution was added such that a pH of the mixed solution for particle growth was gradually decreased by 0.2 per hour until the pH of the mixed solution for particle growth reached pH 11.4, starting from pH 12, and then the NaOH aqueous solution was added such that the pH of the mixed solution for particle growth is maintained constant at 11.4.

And a mixed solution for positive electrode active material precursors, in which an average particle diameter ($D_{50}$) of the positive electrode active material precursor in the solution is 4.0 $\mu$m, was prepared by adding the transition metal-containing solution to the mixed solution for particle growth at a flow rate of 32.5 mL/min, adding the NaOH aqueous solution while adding the $NH_4OH$ aqueous solution at a flow rate gradually increased from 8 mL/min to 13 mL/min, and performing stirring for 72 hours while maintaining the stirring speed at 600 rpm. Here, the transition metal-containing solution was added at a flow rate of 1.3 times the flow rate of the transition metal-containing solution added when preparing the mixed solution for particle growth, the $NH_4OH$ aqueous solution was added at a flow rate gradually increased to reach 40% of the flow rate of the transition metal-containing solution, and the NaOH aqueous solution was added such that a pH of the mixed solution for positive electrode active material precursors is maintained constant at 11.4.

The mixed solution for positive electrode active material precursors was filtered and dried to prepare a positive electrode active material precursor in which a density of an inner portion is lower than a density of an outer portion.

**Comparative Preparation Example 1**

$NiSO_4$, $CoSO_4$, and $MnSO_4$ were mixed in water such that a molar ratio of nickel: cobalt: manganese was 88.5:3.5:8 to prepare a transition metal-containing solution having a concentration of 2.4 M. And 25 wt% of NaOH aqueous solution, and 9 wt% of $NH_4OH$ aqueous solution were prepared.

5 L of deionized water was put into a 30 L reactor including a stirring device, and then dissolved oxygen in the water was removed through purging with nitrogen gas in the reactor at a rate of 10 L/min to create a non-oxidizing atmosphere in the reactor. Thereafter, the NaOH aqueous solution and the $NH_4OH$ aqueous solution were added to adjust a pH of the solution in the reactor to reach pH 12.0, and then initial conditions were set such that a temperature of the reactor was 54°C and a stirring speed was 750 rpm.

And a mixed solution for positive electrode active material precursors, in which an average particle diameter ($D_{50}$) of the positive electrode active material precursor in the solution is 4.0 $\mu$m, was prepared by adding the NaOH aqueous solution to the reactor while adding a transition metal-containing solution at a flow rate of 25 mL/min and the $NH_4OH$ aqueous solution at a flow rate of 8 mL/min, and performing stirring for 100 hours while maintaining the stirring speed at 750 rpm. Here, the NaOH aqueous solution was added such that a pH of the mixed solution for positive electrode active material precursors is maintained constant at 12.

The mixed solution for positive electrode active material precursors was filtered and dried to prepare a positive electrode active material precursor in which a density of an inner portion is the same as a density of an outer portion.

**Comparative Preparation Example 2**

$NiSO_4$, $CoSO_4$, and $MnSO_4$ were mixed in water such that a molar ratio of nickel: cobalt: manganese was 88.5:3.5:8 to prepare a transition metal-containing solution having a concentration of 2.4 M. And 25 wt% of NaOH aqueous solution, and 9 wt% of $NH_4OH$ aqueous solution were prepared.

5 L of deionized water was put into a 30 L reactor including a stirring device, and then dissolved oxygen in the water was removed through purging with nitrogen gas in the reactor at a rate of 10 L/min to create a non-oxidizing atmosphere in the reactor. Thereafter, the NaOH aqueous solution and the $NH_4OH$ aqueous solution were added to adjust a pH of the solution in the reactor to reach pH 12.0, and then initial conditions were set such that a temperature of the reactor was 54°C and a stirring speed was 950 rpm.

A mixed solution for seed was prepared by adding the NaOH aqueous solution to the reactor while adding a transition metal-containing solution at a flow rate of 25 mL/min and the $NH_4OH$ aqueous solution at a flow rate of 8 mL/min, and performing stirring for 1 hour while maintaining the stirring speed at 950 rpm. Here, the NaOH aqueous solution was added such that a pH of the mixed solution for seed is maintained constant at 12.2.

Thereafter, a mixed solution for particle growth in which an average particle diameter ($D_{50}$) of a seed in the solution is 1.0 $\mu$m was prepared by adding the NaOH aqueous solution to the mixed solution for seed while adding the transition metal-containing solution at a flow rate of 25 mL/min and the $NH_4OH$ aqueous solution at a flow rate of 8 mL/min, performing stirring for 7.9 hours while gradually decreasing the stirring speed by 70 rpm per hour until the stirring speed reached 400 rpm, starting from 950 rpm, and performing stirring for 42.1 hours while maintaining the stirring speed at 400 rpm. Here, the NaOH aqueous solution was added such that a pH of the mixed solution for particle growth was gradually decreased by 0.1 per hour until the pH of the mixed solution for particle growth reached pH 11.4, starting from pH 12.2, and then the NaOH aqueous solution was added such that the pH of the mixed solution for particle growth is maintained constant at 11.4.

And a mixed solution for positive electrode active material precursors, in which an average particle diameter ($D_{50}$) of the positive electrode active material precursor in the solution is 4.0 $\mu$m, was prepared by adding the transition metal-containing solution to the mixed solution for particle growth at a flow rate of 37.5 mL/min, adding the NaOH aqueous solution while adding the $NH_4OH$ aqueous solution at a flow rate gradually decreased from 8 mL/min to 7.5 mL/min, and performing stirring for 35 hours while maintaining the stirring speed at 400 rpm. Here, the transition metal-containing solution was added at a flow rate of 1.5 times the flow rate of the transition metal-containing solution added when preparing the mixed solution for particle growth, the $NH_4OH$ aqueous solution was added at a flow rate gradually increased to reach 20% of the flow rate of the transition metal-containing solution, and the NaOH aqueous solution was added such that a pH of the mixed solution for positive electrode active material precursors is maintained constant at 11.4.

The mixed solution for positive electrode active material precursors was filtered and dried to prepare a positive electrode active material precursor in which a density of an inner portion is higher than a density of an outer portion.

**Example 1**

The positive electrode active material precursor prepared in Preparation Example 1 and LiOH were mixed in an alumina crucible such that a molar ratio of Li: (Ni+Co+Mn) was 1:1, thereby preparing a mixture. The mixture was primarily sintered at a temperature of 870°C for 5.5 hours in an oxygen atmosphere to prepare a primary sintered product.

The primary sintered product was ground using a jet mill or a pin mill so as to have an average particle diameter ($D_{50}$) of 4.0 $\mu$m and the maximum particle diameter ($D_{max}$) of 13.0 $\mu$m. The ground primary sintered product and LiOH were mixed such that the molar ratio of Li: (Ni+Co+Mn) was 1.03:1, and then were secondarily sintered at a temperature of 790°C for 8 hours to prepare a secondary sintered product. The secondary sintered product was ground using a jet mill or a pin mill so as to have an average particle diameter ($D_{50}$) of 4.0 $\mu$m and the maximum particle diameter ($D_{max}$) of 13.0 $\mu$m, thereby preparing a positive electrode active material.

**Example 2**

A secondary sintered product (positive electrode active material) was prepared in the same manner as in Example 1 except that the positive electrode active material precursor prepared in Preparation Example 2 was used instead of the positive electrode active material precursor prepared in Preparation Example 1.

**Example 3**

A secondary sintered product (positive electrode active material) was prepared in the same manner as in Example 1 except that the positive electrode active material precursor prepared in Preparation Example 3 was used instead of the positive electrode active material precursor prepared in Preparation Example 1.

### Example 4

A secondary sintered product (positive electrode active material) was prepared in the same manner as in Example 1 except that the positive electrode active material precursor prepared in Preparation Example 4 was used instead of the positive electrode active material precursor prepared in Preparation Example 1.

### Comparative Example 1

A secondary sintered product (positive electrode active material) was prepared in the same manner as in Example 1 except that the positive electrode active material precursor prepared in Comparative Preparation Example 1 was used instead of the positive electrode active material precursor prepared in Preparation Example 1.

### Comparative Example 2

A secondary sintered product (positive electrode active material) was prepared in the same manner as in Example 1 except that the positive electrode active material precursor prepared in Comparative Preparation Example 2 was used instead of the positive electrode active material precursor prepared in Preparation Example 1.

### Experimental Example 1: Positive Electrode Active Material Precursor Analysis

The positive electrode active material precursor prepared in each of Preparation Examples and Comparative Preparation Examples, a carbon black (Denka Company Limited, FX35), and a binder [a mixture of PVdF (Kureha Corporation, KF9709) and BM730H (Zeon Corporation) at a weight ratio of 6:1] were added into a solvent (N-methylpyrrolidone (NMP)) at a weight ratio of 83:10:7, and then were stirred at 1,500 rpm for 95 minutes, using Homogenizing Disper Model 2.5 (PRIMIX Corporation) to prepare a positive electrode precursor slurry.

One surface of an aluminum foil current collector was coated with the positive electrode precursor slurry, dried at 130°C for 3 hours, and cut using a cross-cutter. Then, an SEM image of a cross-section of the positive electrode active material precursor was captured using a scanning electron microscope (QUANTA FEG 250 by FEI), and the SEM image is shown in FIG. 1.

FIG. 1 shows respective SEM images of cross-sections of the positive electrode active material precursors prepared in Preparation Examples and Comparative Preparation Examples. Specifically, FIG. 1(A) is the SEM image of the cross-section of the positive electrode active material precursor prepared in Preparation Example 1. FIG. 1(B) is the SEM image of the cross-section of the positive electrode active material precursor prepared in Preparation Example 2. FIG. 1(C) is the SEM image of the cross-section of the positive electrode active material precursor prepared in Preparation Example 3. FIG. 1(D) is the SEM image of the cross-section of the positive electrode active material precursor prepared in Preparation Example 4. FIG. 1(E) is the SEM image of the cross-section of the positive electrode active material precursor prepared in Comparative Preparation Example 1. FIG. 1(F) is the SEM image of the cross-section of the positive electrode active material precursor prepared in Comparative Preparation Example 2.

It was confirmed from FIG. 1 that, in the positive electrode active material precursors prepared in Preparation Examples 1 to 4, a density of an outer portion of a particle was higher than a density of an inner portion thereof.

In contrast, in the positive electrode active material precursor prepared in Comparative Preparation Example 1, both inner and outer portions of a particle were confirmed to have high densities, and in the positive electrode active material precursor prepared in Comparative Preparation Example 2, a density of an outer portion was confirmed to be lower than that of an inner portion.

### Experimental Example 2: Positive Electrode Active Material Analysis

### Morphology Analysis

Each of the positive electrode active materials prepared in Examples and Comparative Examples was photographed using a scanning electron microscope (JEOL JSM-7900F by JEOL) to obtain a SEM image.

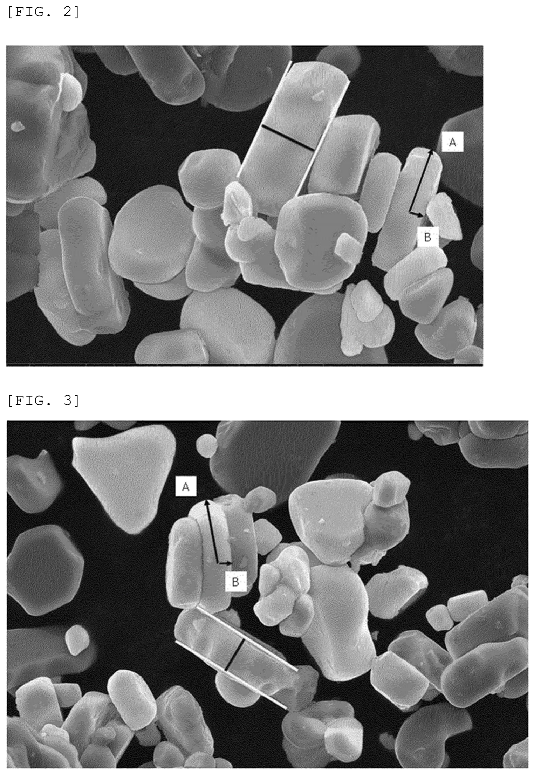

Image analysis was performed on the SEM images based on an artificial intelligence model to obtain segmentation images by segmentation of a plurality of primary particles, and the respective segmentation images of the positive electrode active materials prepared in Examples and Comparative Examples are shown in FIGS. 2 to 7.

FIG. 2 is the segmentation image of the positive electrode active material prepared in Example 1.

FIG. 3 is the segmentation image of the positive electrode active material prepared in Example 2.

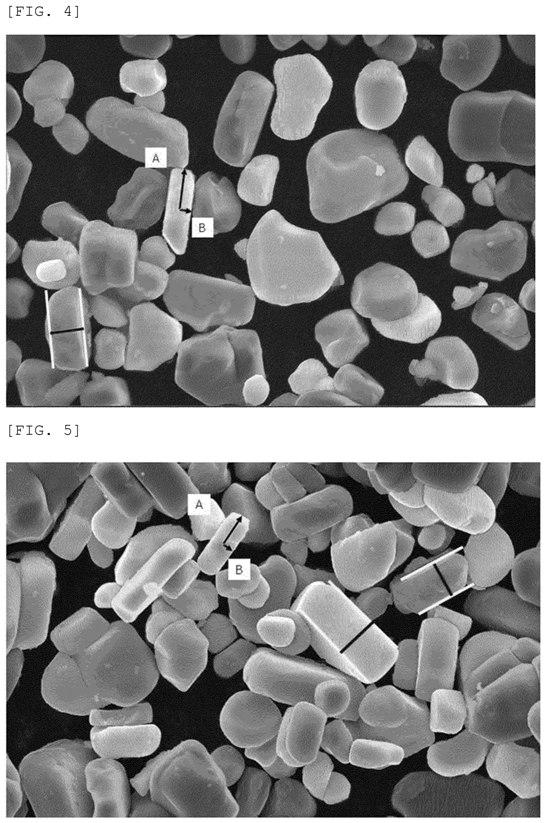

FIG. 4 is the segmentation image of the positive electrode active material prepared in Example 3.

FIG. 5 is the segmentation image of the positive electrode active material prepared in Example 5.

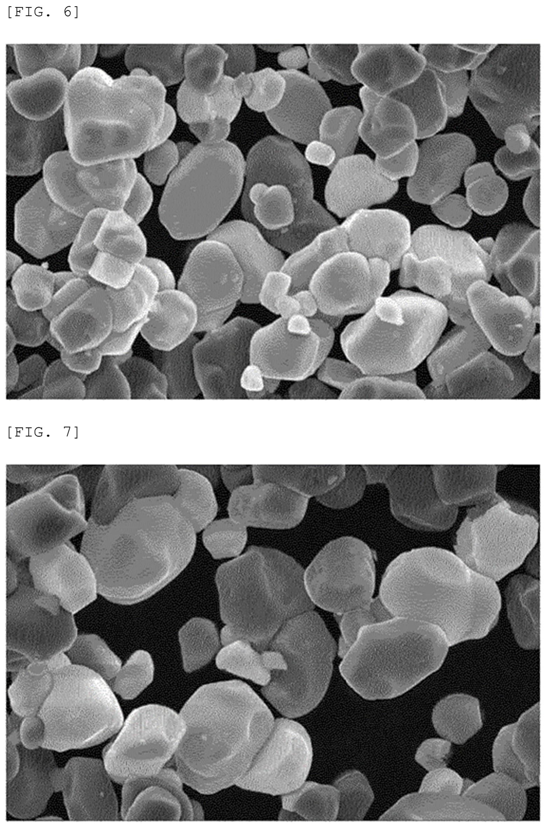

FIG. 6 is the segmentation image of the positive electrode active material prepared in Comparative Example 1.

FIG. 7 is the segmentation image of the positive electrode active material prepared in Comparative Example 2.

It was confirmed from FIGS. 2 to 7 that each of the positive electrode active materials prepared in Examples and Comparative Examples was in the form of a single particle composed of 30 or less primary particles. Also, each of the positive electrode active materials prepared in Examples 1 and 4 was confirmed to include a disk-type first lithium composite transition metal oxide in an amount of 20 vol% to 100 vol% based on a total volume of the positive electrode active material.

Here, the disk type refers to a primary particle observed from an SEM image of a surface of the positive electrode active material, where, when an imaginary tangent line with the most contact points is drawn to each of two boundary lines of the primary particle present within an angle of 45° or less based on a long diameter direction and one imaginary line crossing the two tangent lines is drawn, interior angles of same side are at least 150° and at most 210°, and an aspect ratio of (major axis/minor axis) is 1.5 or more.

For reference, when a yellow imaginary tangent line with the most contact points was drawn to each of two boundary lines of the primary particle present within an angle of 45° or less based on a red long diameter direction in FIGS. 2 to 5, one imaginary line (not shown) crossing the two yellow tangent lines satisfies the condition that interior angles of same side are at least 150° and at most 210°, and a primary particle corresponding to this case is defined as a disk-type primary particle.

**Aspect Ratio Analysis**

Respective major axes and minor axes of the positive electrode active materials prepared in Examples were analyzed from the SEM images of the positive electrode active materials obtained from the morphology analysis, and are shown in FIGS. 2 to 5 below. For reference, in FIGS. 2 to 5, a red arrow refers to the minor axis, a blue arrow refers to the major axis, and a contact point of the blue arrow and the red arrow refers to a center of gravity of the primary particle. For reference, A shown in FIGS. 2 to 5 is the major axis (blue arrow), and B (red arrow) is the minor axis.

It was confirmed from FIGS. 2 to 5 that the first lithium composite transition metal oxide included in each of the positive electrode active materials prepared in Examples 1 to 4 was a disk-type primary particle having an aspect ratio of 1.5 or more.

**Analysis of Volume Ratio, Degree of Single-Particle Formation, and Average Radius**

Respective volume ratios, degrees of single-particle formation ($V_{30}$), and average radiuses ($R_{50}$) of Examples and Comparative Examples were measured from the SEM images of the positive electrode active materials obtained from the morphology analysis, and are shown in Table 1 below.

Specifically, an area of each primary particle is measured by the number of pixels corresponding to each of the n primary particles observed from an image which was obtained by projecting the SEM image (measurement magnification 3,000 times) taken on the surface of each of the positive electrode active materials of Examples and Comparative Examples onto a two-dimensional plane. Thereafter, assuming that a surface of the primary particle is circular, that is, using a radius of a circle having the same area as the surface area of each of the primary particles, a radius that is a radius of the surface of the primary particle was derived.

Using the radius, a volume was calculated according to Equation 1 below, and a total volume of the positive electrode active material and a total volume of the first lithium composite transition metal oxide were obtained. Then, a value (proportion by volume (vol%) of the first lithium composite transition metal oxide) calculated by dividing the total volume of the first lithium composite transition metal oxide by the total volume of the positive electrode active material and multiplying 100 is shown in Table 1 below. A degree of single-particle formation ($V_{50}$) corresponding to the volume at 50% of cumulative distribution of volume of the primary particles was measured and shown in Table 1 below. An average radius ($R_{50}$) at 50% of cumulative distribution of radius of the particles was measured and shown in Table 1 below.

[Equation 1]

$$Volume = \frac{4\pi}{3} \times radius^3$$

**Average Particle Diameter Analysis**

Respective average particle diameters ($D_{50}$) of the positive electrode active materials prepared in Examples and Comparative Examples were measured using a particle size analyzer (PSA) (QUANTA FEG 250 by FEI) and shown in Table below.

[Table 1]

| | Volume ratio of first lithium composite transition metal oxide (vol%) | Degree of single-particle formation ($V_{50}$) ($\mu m^3$) | Average radius ($R_{50}$) ($\mu m$) | Average particle diameter ($D_{50}$) ($\mu m$) |
|---|---|---|---|---|
| Example 1 | 56 vol% | 4.81 | 2.16 | 4.74 |
| Example 2 | 40 vol% | 4.75 | 2.21 | 4.82 |
| Example 3 | 27 vol% | 4.10 | 2.36 | 4.78 |
| Example 4 | 75 vol% | 1.37 | 4.2 | 4.92 |
| Comparative Example 1 | 9 vol% | 1.34 | 4.13 | 4.79 |
| Comparative Example 2 | 6 vol% | 2.36 | 3.21 | 4.94 |

It was confirmed from Table 1 that, in the positive electrode active materials prepared in Examples 1 to 4, i.e., the positive electrode active materials prepared using the positive electrode active material precursors in which the density of the inner portion is lower than the density of the outer portion, the first lithium composite transition metal oxide was included in an amount of 20 vol% to 100 vol% based on the total volume of the positive electrode active material, and it was confirmed that the degrees of single-particle formation ($V_{50}$) was 1.2 $\mu m^3$ or more, and the average radius ($R_{50}$) was 1 $\mu m$ to 15 $\mu m$.

In contrast, in the positive electrode active materials prepared in Comparative Examples 1 and 2, i.e., the positive electrode active materials prepared using the positive electrode active material precursors in which the density of the inner portion is the same or more as/than the density of the outer portion, the first lithium composite transition metal oxide was confirmed to be included in an amount of less than 20 vol% based on the total volume of the positive electrode active material, and it was confirmed that the degrees of single-particle formation ($V_{50}$) was 1.2 $\mu m^3$ or more, and the average radius ($R_{50}$) was 1 $\mu m$ to 15 $\mu m$.

**Experimental Example** 3: **Battery Characteristics Evaluation**

**Manufacture of Coin-type Half-cell**

A positive electrode slurry was prepared by mixing each of the positive electrode active materials prepared in Examples and Comparative Examples, a conductive agent (FX35), and a binder (KF9700 and BM73OH were mixed at a weight ratio of 2.8:0.2) at a weight ratio of 95:2:3 in an N-methyl-2-pyrrolidone (NMP) solvent.

One surface of an aluminum current collector was coated with the positive electrode slurry, dried at 130°C, and then rolled to have a porosity of 20 vol%, thereby preparing a positive electrode.

A lithium metal electrode (Li metal disk) was used as a negative electrode, and an electrode assembly was manufactured by interposing a separator between the positive electrode and the negative electrode. Then, the electrode assembly was disposed inside a battery case, and then an electrolyte solution was injected into the battery case to manufacture a coin-type half-cell. Here, an electrolyte solution, obtained by dissolving 1 M of $LiPF_6$ in an organic solvent in which ethylene carbonate:ethyl methyl carbonate:dimethyl carbonate were mixed in a volume ratio of 3:3:4, was used as the electrolyte solution.

After the coin-type half-cells were manufactured, evaluation was performed on the cells by using the following method.

**Capacity and Output Characteristics Evaluation**

Each of the coin-type half-cells was charged at a constant current of 0.1 C to 4.25 V in a constant current/constant voltage (CC/CV) mode at 25°C (cut-off current: 0.05 C), and then discharged at a constant current of 0.1 C to 2.5 V in a CC mode, and here, charge capacity (mA/g) and discharge capacity (mAh/g) were measured. The measured charge capacity (mA/g) and discharge capacity (mAh/g) are shown in Table 2 below.

**Life characteristics Evaluation**

A cycle of charging each of the coin-type half-cells at a constant current of 0.2 C to 4.25 V in the CC/CV mode at 45°C (cut-off current: 0.05 C) and then discharging the coin-type half-cell at a constant current of 0.2 C to 2.5 V in the CC mode was set as one cycle, and a total of 30 cycles of the charging and discharging were repeated. Then, discharge capacities in a 1st cycle and a 30th cycle were measured, and then a percentage (capacity retention (%)) of the discharge capacity in the 30th cycle to the discharge capacity in the 1st cycle was calculated. The results are shown in Table 2 below.

[Table 2]

| | 25°C | | 45°C |
|---|---|---|---|
| | Charge capacity (mAh/g) | Discharge capacity (mAh/g) | Capacity retention (%) |
| Example 1 | 230.1 | 203.3 | 98.19 |
| Example 2 | 230.2 | 203.8 | 97.96 |
| Example 3 | 230.5 | 204.1 | 97.63 |
| Example 4 | 229.8 | 201.2 | 98.54 |
| Comparative Example 1 | 230.8 | 204.2 | 96.67 |
| Comparative Example 2 | 230.7 | 203.8 | 96.75 |

It was confirmed from Table 2 that the cells manufactured according to Examples 1 to 4, i.e., the cells manufactured using the positive electrode active materials each including 20 vol% to 100 vol% of the first lithium composite transition metal oxide in the form of a single particle composed of 30 or less disk-type primary particles, based on the total volume of the positive electrode active material, exhibited excellent capacity retentions at a high temperature compared to the cells manufactured according to Comparative Examples 1 and 2, i.e., the cells manufactured using the positive electrode active materials each including less than 20 vol% of the first lithium composite transition metal oxide in the form of a single particle composed of 30 or less disk-type primary particles, based on the total volume of the positive electrode active material.

The cells manufactured according to Examples 1 to 3, i.e., the cells manufactured using the positive electrode active materials each including 20 vol% to 70 vol% of the first lithium composite transition metal oxide in the form of a single particle based on the total volume of the positive electrode active material, were confirmed to have larger discharge capacities than the cell manufactured according to Example 4, i.e., the cell manufactured using the positive electrode active material including more than 70 vol% of the first lithium composite transition metal oxide in the form of a single particle based on the total volume of the positive electrode active material.

In conclusion, the positive electrode active material including a specific volume range of the single particle-type first lithium composite transition metal oxide including 30 or less disk-type primary particles was confirmed to have effects of simultaneously improving the output characteristics and the life characteristics.

**Claims**

1. A positive electrode active material comprising:

a first lithium composite transition metal oxide in a form of a single particle; and
optionally a second lithium composite transition metal oxide in a form of a single particle,
wherein the first lithium composite transition metal oxide in the form of a single particle comprises 30 or less disk-type primary particles,
wherein each of the disk-type primary particles is a primary particle observed from a scanning electron microscope (SEM) image of a surface or cross-section of the positive electrode active material, wherein, when an imaginary tangent line with the most contact points is drawn to each of two boundary lines of the primary particle present within an angle of 45° or less based on a long diameter direction and one imaginary line crossing the two tangent lines is drawn, interior angles of same side are at least 150° and at most 210°, and an aspect ratio of (major axis/minor axis) is 1.5 or more,
wherein the positive electrode active material comprises the first lithium composite transition metal oxide in an amount of 20 vol% to 100 vol% based on a total volume of the positive electrode active material.

2. The positive electrode active material of claim 1, wherein the positive electrode active material comprises the first lithium composite transition metal oxide in an amount of 20 vol% to 70 vol% based on the total volume of the positive electrode active material.

3. The positive electrode active material of claim 1, wherein the aspect ratio (major axis/minor axis) of the first lithium composite transition metal oxide is 1.5 to 10.

4. The positive electrode active material of claim 1, wherein, when calculating a volume from Equation 1 below for each of the primary particles observed from the SEM image of the surface or cross section of the positive electrode active material, the first lithium composite transition metal oxide has a degree of single-particle formation ($V_{50}$) of 1.2 $\mu m^3$ or more, the degree of single-particle formation ($V_{50}$) corresponding to a volume at 50% of cumulative distribution of volume of the primary particles:

[Equation 1]

$$\text{Volume} = \frac{4\pi}{3} \times radius^3$$

wherein, in Equation 1,
the radius is a radius of a surface or a cross-section of the primary particle when assuming that the surface or cross-section of the primary particle, which is observed from the SEM image (measurement magnification: 3,000 times), is circular.

5. The positive electrode active material of claim 1, wherein, when calculating a radius of each of the primary particles observed from the SEM image (measurement magnification: 3,000 times) of the surface or cross-section of the positive electrode active material, the first lithium composite transition metal oxide has an average radius ($R_{50}$) of 1 $\mu m$ to 15 $\mu m$ at 50% of cumulative distribution of radius of the primary particles, wherein the radius is a radius of a surface or cross-section of the primary particle when assuming that the surface or cross-section of the primary particle is circular.

6. The positive electrode active material of claim 1, wherein the first lithium composite transition metal oxide has a composition represented by Formula 1 below:

[Formula 1]   $Li_aNi_xCo_yM^1{}_zM^2{}_{1-x-y-z}O_2$

wherein, in Formula 1,

$M^1$ is at least one selected from the group consisting of manganese (Mn) and aluminum (Al),
$M^2$ is at least one selected from the group consisting of boron (B), barium (Ba), cerium (Ce), chromium (Cr), fluorine (F), magnesium (Mg), vanadium (V), titanium (Ti), iron (Fe), zirconium (Zr), zinc (Zn), silicon (Si), yttrium (Y), niobium (Nb), gallium (Ga), tin (Sn), molybdenum (Mo), tungsten (W), phosphorus (P), sulfur (S), strontium (Sr), tantalum (Ta), lanthanum (La), and hafnium (Hf), and
$0.9 \leq a \leq 1.3$, $0.6 \leq x < 1.0$, $0 < y < 0.4$, $0 < z < 0.4$, and $0 \leq 1-x-y-z < 0.4$.

7. A positive electrode comprising the positive electrode active material of any one of claims 1 to 6.

8. A lithium secondary battery comprising the positive electrode of claim 7.

9. A method for preparing a positive electrode active material, the method comprising steps of:

(A) preparing a mixture by mixing a positive electrode active material precursor, in which a density of an inner portion of the positive electrode active material precursor is lower than a density of an outer portion thereof, and a first lithium-containing raw material; and

(B) preparing a primary sintered product by performing primary sintering on the mixture at a temperature of 800°C to 950°C,

wherein the inner portion is a region corresponding to 50% or less of a radius from a center of the positive electrode active material precursor to the outermost point,

wherein the positive electrode active material is a positive electrode active material in a form of a single particle composed of 30 or less primary particles, and comprises a first lithium composite transition metal oxide that is a disk type,

wherein the first lithium composite transition metal oxide is comprised in an amount of 20 vol% to 100 vol% based on a total volume of the positive electrode active material.

10. The method of claim 9, further comprising, immediately after step (B), step (B1) of grinding the primary sintered product.

11. The method of claim 9, further comprising, after step (B), step (C) of preparing a secondary sintered product by mixing a second lithium-containing raw material with the primary sintered product and performing secondary sintering at a temperature of 680°C to 850°C.

12. The method of claim 11, further comprising, immediately after step (C), step (C1) of grinding the secondary sintered product.

13. The method of claim 9, comprising, for the positive electrode active material precursor, the steps of:

(S1) preparing a mixed solution for seed by adding a transition metal-containing solution and an ammonium ion-containing solution to a reactor comprising a stirring device at a constant flow rate, and performing stirring while adding a basic aqueous solution and maintaining a stirring speed;

(S2) preparing a mixed solution for particle growth by performing stirring while adding the transition metal-containing solution, the ammonium ion-containing solution, and the basic aqueous solution to the mixed solution for seed and gradually decreasing the stirring speed; and

(S3) preparing a mixed solution for positive electrode active material precursors by adding the transition metal-containing solution to the mixed solution for particle growth at a flow rate increased relative to a flow rate in step (S2), adding the ammonium ion-containing solution at a gradually increasing flow rate, and performing stirring while adding the basic aqueous solution and maintaining the stirring speed,

wherein the basic aqueous solution is added such that a pH of the mixed solution for seed is maintained constant, the basic aqueous solution is added such that a pH of the mixed solution for particle growth is gradually decreased, and the basic aqueous solution is added such that a pH of the mixed solution for positive electrode active material precursors is maintained constant.

14. The method of claim 13, wherein the basic aqueous solution is added such that the pH of the mixed solution for particle growth is gradually decreased from a range of 12 to 13 to a range of 11.2 to 12.6.

15. The method of claim 13, wherein, in step (S2), the stirring is performed while gradually decreasing the stirring speed from a range of 700 rpm to 900 rpm to a range of 500 rpm to 650 rpm.

16. The method of claim 13, wherein, in step (S3), the transition metal-containing solution is added at the flow rate of 1.2 times to 1.4 times the flow rate in step (S2), and the ammonium ion-containing solution is added at the gradually increasing flow rate so as to reach a flow rate of 20% to 45% of the flow rate of the transition metal-containing solution.

[FIG. 1]

[FIG. 2]

[FIG. 3]

[FIG. 4]

[FIG. 5]

[FIG. 6]

[FIG. 7]

# INTERNATIONAL SEARCH REPORT

| | International application No. |
|---|---|
| | **PCT/KR2024/007558** |

| | |
|---|---|
| **A.** | **CLASSIFICATION OF SUBJECT MATTER** |
| | **H01M 4/131**(2010.01)i; **H01M 4/525**(2010.01)i; **H01M 4/505**(2010.01)i; **H01M 10/052**(2010.01)i; **H01M 4/02**(2006.01)i |

According to International Patent Classification (IPC) or to both national classification and IPC

| | |
|---|---|
| **B.** | **FIELDS SEARCHED** |

Minimum documentation searched (classification system followed by classification symbols)

H01M 4/131(2010.01); C01G 53/00(2006.01); H01M 10/052(2010.01); H01M 4/36(2006.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(cathode active material), 단입자(single particle), 부피(volume), 밀도(density), 교반속도(stirring speed), 암모늄 이온(ammonium ion), 전이금속 용액(transition metal solution), 유량(flow rate), 디스크 형상(disk shaped)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | KR 10-2019-0065963 A (SAMSUNG SDI CO., LTD.) 12 June 2019 (2019-06-12)<br>See claims 1, 2, 8, 9, 11 and 14; paragraphs [0021], [0022], [0028], [0093], [0098] and [0125]-[0132]; and figure 1. | 1-8 |
| Y | | 9-12 |
| A | | 13-16 |
| Y | KR 10-2023-0033480 A (SAMSUNG SDI CO., LTD.) 08 March 2023 (2023-03-08)<br>See claims 1 and 16; and paragraph [0078]. | 9-12 |
| A | KR 10-2473535 B1 (SAMSUNG SDI CO., LTD.) 05 December 2022 (2022-12-05)<br>See claims 1, 3-9, 11-14, 16 and 17. | 1-16 |
| A | JP 2018-095505 A (SUMITOMO METAL MINING CO., LTD.) 21 June 2018 (2018-06-21)<br>See claims 1-24. | 1-16 |

| ✓ Further documents are listed in the continuation of Box C. | ✓ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 September 2024** | **11 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/007558** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2022-0057480 A (LG ENERGY SOLUTION, LTD.) 09 May 2022 (2022-05-09)<br>See claims 1-14. | 1-16 |

Form PCT/ISA/210 (second sheet) (July 2022)

## INTERNATIONAL SEARCH REPORT
### Information on patent family members

International application No.

**PCT/KR2024/007558**

| Patent document cited in search report | | | Publication date (day/month/year) | Patent family member(s) | | | Publication date (day/month/year) |
|---|---|---|---|---|---|---|---|
| KR | 10-2019-0065963 | A | 12 June 2019 | CN | 111587500 | A | 25 August 2020 |
| | | | | CN | 111587500 | B | 29 July 2022 |
| | | | | EP | 3723172 | A2 | 14 October 2020 |
| | | | | KR | 10-2185126 | B1 | 01 December 2020 |
| KR | 10-2023-0033480 | A | 08 March 2023 | CN | 115732652 | A | 03 March 2023 |
| | | | | EP | 4144703 | A1 | 08 March 2023 |
| | | | | JP | 2023-036062 | A | 13 March 2023 |
| | | | | JP | 7498233 | B2 | 11 June 2024 |
| | | | | US | 2023-0082796 | A1 | 16 March 2023 |
| KR | 10-2473535 | B1 | 05 December 2022 | KR | 10-2022-0057686 | A | 09 May 2022 |
| | | | | US | 2022-0140331 | A1 | 05 May 2022 |
| JP | 2018-095505 | A | 21 June 2018 | JP | 6949297 | B2 | 13 October 2021 |
| KR | 10-2022-0057480 | A | 09 May 2022 | CN | 116420251 | A | 11 July 2023 |
| | | | | EP | 4220772 | A1 | 02 August 2023 |
| | | | | JP | 2023-546964 | A | 08 November 2023 |
| | | | | KR | 10-2686481 | B1 | 19 July 2024 |
| | | | | US | 2023-0378456 | A1 | 23 November 2023 |
| | | | | WO | 2022-092922 | A1 | 05 May 2022 |

Form PCT/ISA/210 (patent family annex) (July 2022)

**EP 4 708 374 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230071872
- KR 20210117212 A
- KR 1020220048191 A
- KR 1020220048192 A